# EUROPEAN PATENT APPLICATION

(11) **EP 4 700 524 A1**
(43) Date of publication of application: **25.02.2026**
(21) Application number: 24792688.4
(22) Date of filing: 17.04.2024
(51) Int. Cl.: G05D 1/246, A01B 69/00, G05D 1/43

(54) **ASSISTANCE SYSTEM FOR AGRICULTURAL MACHINE**

(30) Priority: 20.04.2023 JP 2023069220
(71) Applicant: KUBOTA CORPORATION, Osaka-shi, Osaka 556-8601 (JP)
(72) Inventor: TOKIEDA, Yoshiki, Sakai-shi, Osaka 590-0908 (JP)
(74) Representative: Cabinet Beau de Loménie
(86) International application number: PCT/JP2024/015235
(87) International publication number: WO 2024/219416

(57) **Abstract**

The present invention makes it possible to accurately know a position of an agricultural machine being outside of an agricultural field. An assistance system (S) for an agricultural machine (1) includes: a first position detector (30) provided in or on the agricultural machine (1) to detect a vehicle-body position (VP) that is a position of the agricultural machine (1); a map creator (55) configured or programmed to create an external map which indicates an external area (E2) outside the agricultural field (G) and includes a periphery of the agricultural field (G); and an assistance device (80) configured or programmed to assist the agricultural machine (1) based on the vehicle-body position (VP) detected by the first position detection device (30) and based on the external map created by the map creator (55). The map creator (55) is configured or programmed to create an internal map of an internal area (E1) of the field (G) in addition to the external map, thereby creating an entire map of the inside of the field (G) and the outside of the field (G).

## Description

### Technical Field

The present invention relates to assistance systems for agricultural machines.

### Background Art

An agricultural machine is known as disclosed in Patent Literature (PTL) 1. The agricultural machine disclosed in PTL 1 includes a controller which includes a coordinate measurement means to receive radio waves from a GPS satellite via a GPS antenna and to measure coordinates of the agricultural machine, an entrance setting means to set an area in the vicinity of an entrance of an agricultural field on a coordinates display screen of the agricultural machine based on GPS satellite radio waves, a field area setting means to set an area as the agricultural field on the coordinates display screen based on the GPS satellite radio waves, a road position setting means to set positional information about a road on a periphery of the agricultural field based on the GPS satellite radio waves, an entrance entry/exit traveling determination means to determine a traveling direction of the agricultural machine based on traveling history information about the agricultural machine, and an on-field/on-road traveling determination means to determine whether a current position of the agricultural machine is on the agricultural field or on the road based on the traveling direction of the agricultural machine passing through the agricultural field entrance area set by the entrance entry/exit setting means.

### Citation List

### Patent Literature

PTL 1: Japanese Unexamined Patent Application Publication No. 2016-156690

### Summary of Invention

### Technical Problem

The agricultural machine disclosed in PTL 1 uses positional information from a GPS satellite to determine whether a vehicle is on a road or on an agricultural field.

Regarding a vehicle of the agricultural machine disclosed in PTL 1, it is only determined whether the vehicle is on a road or on an agricultural field, and it is not possible to precisely grasp a position of the vehicle when the vehicle is outside of the agricultural field.

In view of the above issues, an object of the present invention is to provide an assistance system for an agricultural machine which can precisely grasp a position of an agricultural machine being outside of an agricultural field.

### Solution to Problem

According to an example embodiment of the present invention, an assistance system for an agricultural machine includes a first position detector provided in or on an agricultural machine and configured to detect a vehicle-body position which is a position of the agricultural machine, a map creator configured or programmed to create an external map which indicates an external area outside of an agricultural field and includes a periphery of the agricultural field, and an assistance device configured or programmed to assist the agricultural machine based on the vehicle-body position detected by the first position detector and based on the external map created by the map creator.

The map creator may be configured or programmed to create an entire map indicating a state inside the agricultural field and a state outside the agricultural field by creating an internal map indicating an internal area of the agricultural field in addition to the external map.

The map creator may be configured or programmed to, when the agricultural machine travels in the external area, create the external map based on one or more vehicle-body positions detected by the first position detector.

The map creator may be configured or programmed to, when the agricultural machine travels in the internal area, create the internal map based on one or more vehicle-body positions detected by the first position detector.

The assistance system may include a detector provided in or on the agricultural machine to detect operation information on an operation of the agricultural machine and/or environmental information on an environment around the agricultural machine. The map creator may be configured or programmed to, when the agricultural machine travels in the external area or in a vicinity of the external area, estimate a position of the external area based on one or more vehicle-body positions detected by the first position detector and based on the operation information and/or the environmental information detected by the detector at the respective one or more vehicle-body positions, and create the external map based on the estimated position of the external area.

The map creator may be configured or programmed to, when the agricultural machine travels in the internal area or in a vicinity of the internal area, estimate a position of the internal area based on one or more vehicle-body positions detected by the first position detector and based on the operation information and/or the environmental information detected by the detector at the respective one or more vehicle-body positions, and create the internal map based on the estimated position of the internal area.

The map creator may be configured or programmed to, when the agricultural machine moves from a first area corresponding to the external map or the internal map to a second area which is adjacent to the first area and for which the map creator has created no map, create a map corresponding to the second area by expanding, from the external map or the internal map corresponding to the first area, the map corresponding to the second area so as to create the entire map.

The map creator may be configured or programmed to, when the agricultural machine moves from a first area corresponding to the external or the internal map to a second area which is adjacent to the first area and for which the map creator has created a corresponding map, combine the map corresponding to the first area and the corresponding map corresponding to the second area so as to create the entire map.

The assistance system may include a second position detector provided in or on a recorder different from the agricultural machine and configured to detect a device position which is a position of the recorder. The map creator may be configured or programmed to, when the recorder is carried in the external area, create the external map based on one or more device positions detected by the second position detector.

The map creator may be configured or programmed to, when the recorder is carried on the agricultural field, create the internal map based on one or more device positions detected by the second position detector.

The map creator may be configured or programmed to, when the recorder is carried from a first area corresponding to the external map or the internal map to a second area which is adjacent to the first area and for which the map creator has created no map, create a map corresponding to the second area by expanding, from the external map or the internal map corresponding to the first area, the map corresponding to the second area so as to create the entire map.

The map creator may be configured or programmed to, when the recorder is carried from a first area corresponding to the external map or the internal map to a second area which is adjacent to the first area and for which the map creator has created a corresponding map, combine the external map or the internal map corresponding to the first area and the corresponding map corresponding to the second area so as to create the entire map.

The map creator may be configured or programmed to receive a designation of an arbitrary position and define the external area based on the designated arbitrary position so as to create the external map.

The map creator may be configured or programmed to receive a designation of an area category indicating a category corresponding to the external area and associate the received area category with the external area.

The assistance system may include a detector provided in or on the agricultural machine and configured to detect operation information on an operation of the agricultural machine and/or environmental information on an environment around the agricultural machine. The map creator may be configured or programmed to, when the agricultural machine travels in the external area or in a vicinity of the external area, estimate an area category indicating a category corresponding to the external area based on one or more vehicle-body positions detected by the first position detector and based on the operation information and/or the environmental information detected by the detector at the respective one or more vehicle-body positions, and associate the estimated area category with the external area.

The agricultural machine may be configured to perform a plurality of functions. The assistance device may include a function definer configured or programmed to define each of the plurality of functions as enabled or disabled based on the one or more vehicle-body positions detected by the first position detector and based on the area category corresponding to the external area to which the vehicle-body position belongs.

The map creator may be configured or programmed to define a warning point at a position on the external map. The assistance device may include a notifier configured or programmed to, when the agricultural machine is in a vicinity of the warning point, provide a notification to a user based on the vehicle-body position detected by the first position detector and based on the warning point defined by the map creator.

The map creator may be configured or programmed to receive input of warning information indicating a point at which a warning is to be provided and content of the warning, and define the warning point based on the inputted warning information.

The assistance system may include a detector provided in or on the agricultural machine to detect operation information on an operation of the agricultural machine and/or environmental information on an environment around the agricultural machine. The map creator may be configured or programmed to, when the agricultural machine travels outside of the agricultural field, estimate warning information indicating a warning point at which a warning is to be provided and content of the warning based on one or more vehicle-body positions detected by the first position detector and based on the operation information and/or the environmental information detected by the detector at the respective one or more vehicle-body positions, and define the warning point based on the estimated warning information.

The assistance device may include an automatic operation controller configured or programmed to perform automatic operation of the agricultural machine based on the vehicle-body position detected by the first position detector and based on the external map created by the map creator.

The assistance system may include a remote operator to receive an operation. The assistance device may include a display to display the external map and the position of the agricultural machine on the external map based on the one or more vehicle-body positions detected by the first position detector and based on the external map created by the map creator, and a remote controller communicably connected to the remote operator and configured or programmed to control the agricultural machine as the remote operator is operated.

The map creator may be provided in a display terminal of the agricultural machine.

### Advantageous Effects of Invention

According to the assistance system of the agricultural machine described above, it is possible to precisely grasp a position of an agricultural machine being outside of an agricultural field.

### Brief Description of Drawings

[FIG. 1] FIG. 1 is a general view of an assistance system for an agricultural machine.
[FIG. 2] FIG. 2 is a schematic diagram of a transmission.
[FIG. 3] FIG. 3 is a perspective view of a linkage.
[FIG. 4A] FIG. 4A illustrates a case where an agricultural machine moves from an internal area for which a new internal map has been created to an external area for which an external map has not been created.
[FIG. 4B] FIG. 4B illustrates a case where an agricultural machine moves from an external area for which a new external map has been created to an internal area for which an internal map has not been created.
[FIG. 4C] FIG. 4C illustrates a case where an agricultural machine moves from an internal area for which a new internal map has been created to an external area for which an external map has already been created.
[FIG. 5] FIG. 5 illustrates an example of a first selection screen.
[FIG. 6] FIG. 6 illustrates an example of a first creation screen.
[FIG. 7] FIG. 7 illustrates a flowchart of serial processes to create an entire map by a map creator.
[FIG. 8A] FIG. 8A illustrates a case according to a first alternative example embodiment where a recorder moves from an internal area for which a new internal map has been created to an external area for which no external map has been created.
[FIG. 8B] FIG. 8B illustrates a case according to the first alternative example embodiment where a recorder moves from an external area for which a new external map has been created to an internal area for which an internal map has been created.
[FIG. 8C] FIG. 8C illustrates a case according to the first alternative example embodiment where a recorder moves from an internal area for which a new internal map has been created to an external area for which an external map has been created.
[FIG. 9] FIG. 9 illustrates a flowchart of serial processes to create an entire map by a map creator according to a second alternative example embodiment.
[FIG. 10] FIG. 10 illustrates a second creation screen according to a third alternative example embodiment.
[FIG. 11] FIG. 11 illustrates a flowchart of serial processes to create an entire map by a map creator according to the third alternative example embodiment.
[FIG. 12] FIG. 12 illustrates an example of a monitoring screen.
[FIG. 13] FIG. 13 illustrates an example of a remote operation screen.
[FIG. 14] FIG. 14 illustrates an example of a notification screen.
[FIG. 15] FIG. 15 illustrates a flowchart of serial processes to define a warning point by a map creator.
[FIG. 16] FIG. 16 illustrates an example of a third creation screen.
[FIG. 17] FIG. 17 illustrates an example of a warning screen.
[FIG. 18] FIG. 18 illustrates a flowchart of serial processes to define a warning point by a map creator according to a fourth alternative example embodiment.
[FIG. 19] FIG. 19 illustrates a third selection screen according to the fourth alternative example embodiment.
[FIG. 20] FIG. 20 is a schematic side view of an agricultural machine.

### Description of Embodiments

The following describes an example embodiment of the present invention with reference to the drawings.

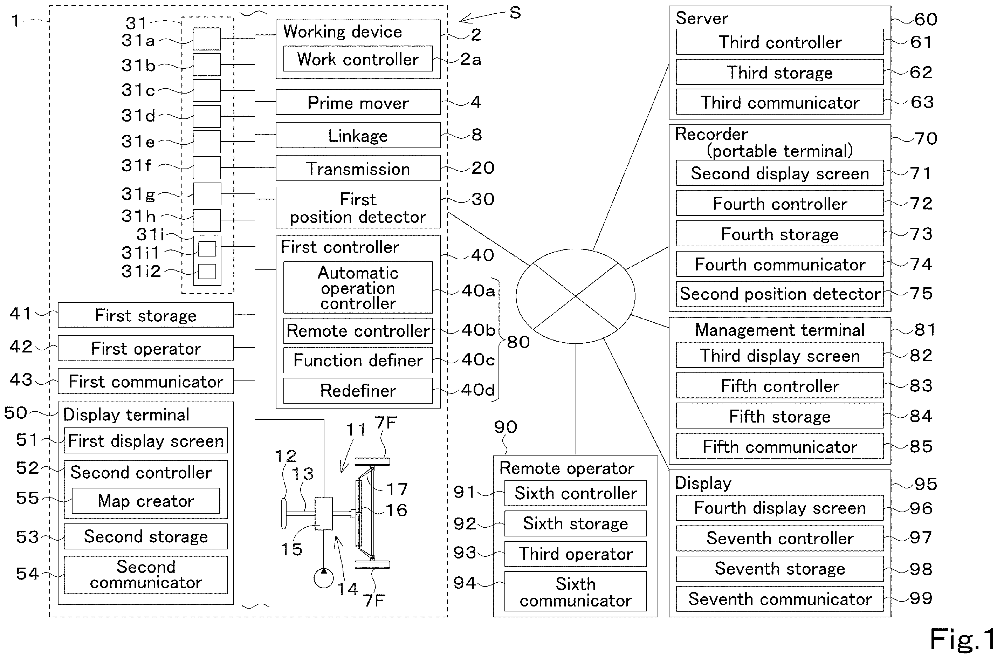

FIG. 1 is a general view of an assistance system S for an agricultural machine 1 according to the present example embodiment. The assistance system S for the agricultural machine 1 according to the present example embodiment is configured to create an entire map indicating an interior of an agricultural field G and an exterior of the agricultural field G. Specifically, the assistance system S for the agricultural machine 1 is configured to create the entire map (internal map and external map) by creating an internal map indicating an inner area of the agricultural field G (internal area E1) and an external map indicating an outer area of the agricultural field G (external area E2) and including a periphery of the agricultural field G, thereby assisting the agricultural machine 1. The assistance system S for the agricultural machine 1 includes, for example, a server 60 and/or the like as well as the agricultural machine 1. First, the agricultural machine 1 will be described.

The agricultural machine 1 is a working machine to perform agricultural work. In the present example embodiment, the agricultural machine 1 is a tractor. The agricultural machine 1 need only be a working machine to perform agricultural work. That is, the agricultural machine 1 is not limited to a tractor and may be a combine, a transplanter or the like.

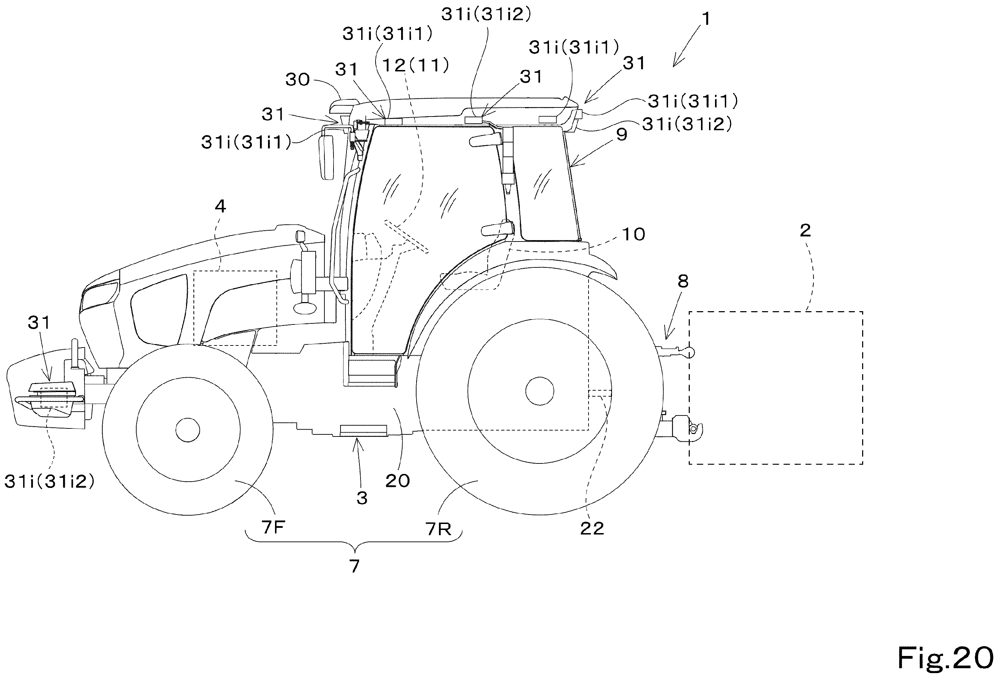

FIG. 20 is a schematic side view of the agricultural machine 1. In the present example embodiment, a direction in which a user faces when sitting on a driver's seat 10 of the agricultural machine 1 (left side of FIG. 20) is referred to as "front", and an opposite direction (right side of FIG. 20) thereto is referred to as "rear". A left side of the user (front side of FIG. 20) is referred to as "left", and a right side of the user (back side of FIG. 20) is referred to as "right". A horizontal direction perpendicular to a front-rear direction is referred to as "width direction".

As illustrated in FIG. 20, the agricultural machine 1 includes a traveling body 3 including a traveling device 7, and includes a prime mover 4 and a transmission 20. The traveling device 7 is a wheeled traveling device 7 with tires defining front wheels 7F and rear wheels 7R. A pair of the front wheels 7F are provided at a distance from each other in the width direction, and a pair of the rear wheels 7R are provided at a distance from each other in the width direction. As another example, the front wheels 7F or the rear wheels 7R may be included in a crawler traveling device 7. The traveling body 3 can travel frontward or rearward via driving of the traveling device 7.

A front portion of the traveling body 3 incorporates the prime mover 4. The prime mover 4 includes, for example, a diesel engine. The prime mover 4 may be another internal combustion engine such as a gasoline engine, or an electric motor or the like. An upper portion of the traveling body 3 includes a cabin 9. A driver's seat 10 is provided inside of the cabin 9.

By changing a gear position, the transmission 20 can change a gear state to transmit a power outputted by the prime mover 4 to change in speed and/or direction of rotation of a propulsion force to propel the traveling device 7 (select whether to cause the traveling device 7 to travel forward or rearward). The transmission 20 also transmits the power of the prime mover 4 to a PTO shaft 22. The PTO shaft 22 is an output shaft to drive the working device 2 drivingly connected thereto.

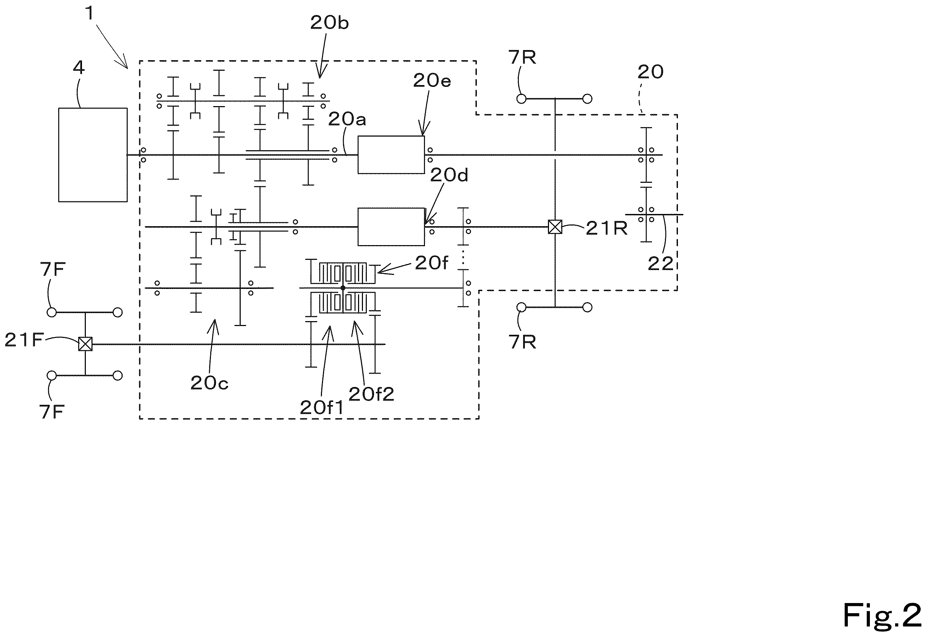

The following describes the transmission 20 in detail. The transmission 20 is configured to shift the propulsion force to propel the traveling device 7 by selecting one of speed levels, and to determine whether the traveling device 7 is to travel forward or rearward. FIG. 2 is a schematic diagram of the transmission 20. As illustrated in FIG. 2, the transmission 20 includes a main shaft (propeller shaft) 20a, a main transmission 20b, a secondary transmission 20c, a power shuttle 20d, a PTO power transmission 20e, and a front transmission 20f. Power from a crankshaft of the prime mover 4 is transmitted to the propeller shaft 20a. The main transmission 20b includes a plurality of gear trains and one or more shifters to select one of the plurality of gear trains, and transmits (speed-changes) a rotation inputted from the propeller shaft 20a via the selected gear train to output the speed-changed rotation.

The secondary transmission 20c, similar to the main transmission 20b, includes a plurality of gear trains and one or more shifters to select one of the plurality of gear trains, and transmits (speed-changes) a rotation inputted from the main transmission 20b via the selected gear train to output the speed-changed rotation.

The power shuttle 20d includes one or more hydraulic clutches to switch a transmission of power, and is configured to switch a rotation direction of power outputted from the secondary transmission 20c by switching the one or more hydraulic clutches to select whether the traveling device 7 is to travel forward or rearward. The power shuttle 20d is connected to a rear wheel differential device 21R which rotatably supports the rear wheels 7R. The one or more hydraulic clutches of the power shuttle 20d is configured to, when being switched to a neutral position, interrupt the transmission of power.

The PTO power transmission 20e includes a hydraulic clutch and is configured to, by switching the hydraulic clutch, switch between a transmission state to transmit power from the propeller shaft 20a to the PTO shaft 22 and a non-transmission state to isolate the PTO shaft 22 from power of the propeller shaft 20a.

The front transmission 20f includes hydraulic clutches respectively defining a first clutch 20f1 and a second clutch 20f2 which receive power from the propeller shaft 20a. For example, the front transmission 20f receives power from the power shuttle 20d via gears and one or more transmission shafts. Power from the first clutch 20f1 or the second clutch 20f2 is transmitted to a front differential device 21F which rotatably supports the front wheels 7F.

When the first clutch 20f1 is disengaged and the second clutch 20f2 is engaged, the power from the power shuttle 20d is transmitted through the second clutch 20f2 to the front wheels 7F. Thus, the agricultural machine 1 is brought into a four-wheel drive (4WD) mode (speed-equalized 4WD state) in which the front wheels 7F and the rear wheels 7R are driven by the power from the power shuttle 20d such that the rotation speed of the front wheels 7F is substantially equal to the rotation speed of the rear wheels 7R.

On the other hand, when the first clutch 20f1 is engaged and the second clutch 20f2 is disengaged, the power from the power shuttle 20d is transmitted through the first clutch 20f1 to the front wheels 7F. Thus, the agricultural machine 1 is brought into a four-wheel drive mode (speed-increased 4WD state) in which the front wheels 7F and the rear wheels 7R are driven such that the rotation speed of the front wheels 7F is increased to exceed the rotation speed of the rear wheels 7R.

When both the first clutch 20f1 and the second clutch 20f2 are disengaged, the power from the power shuttle 20d is not transmitted to the front wheels 7F, such that the agricultural machine 1 is brought into a two-wheel drive (2WD) mode in which only the rear wheels 7R are driven by the power from the power shuttle 20d.

Hydraulic fluid paths are respectively connected to the hydraulic clutches included in the transmission 20, and a control valve (not illustrated) to which hydraulic fluid discharged from a hydraulic pump (not illustrated) is supplied. The hydraulic pump is driven by driving force from the prime mover 4 to discharge hydraulic fluid. The control valve is, for example, a two-position switching valve with a solenoid valve, and the hydraulic clutches are each engaged or disengaged by energizing or demagnetizing a solenoid of the solenoid valve via a control signal outputted from a later-discussed first controller 40.

The agricultural machine 1 can be provided with a working device (implement) 2 coupled thereto. Specifically, a linkage 8 which the working device 2 is attachable thereto and detachable therefrom is provided on a rear portion of the traveling body 3. The linkage 8 includes a three-point linkage mechanism or the like. The agricultural machine 1 tows the working device 2 connected to the linkage 8 with the traveling device 7 driving. The working devices 2 include cultivators to perform cultivation work, fertilizer spreaders to spread fertilizer, agricultural chemical spreaders to spread agricultural chemicals, harvesters to harvest crops, mowers to reap herbage and/or the like, tedders to diffuse herbage and/or the like, rakes to collect herbage or the like, balers to shape herbage or the like, separators to separate crops, and the like.

The foresaid example embodiment is described on an assumption that the agricultural machine 1 is a tractor with the working device 2 connected to the linkage 8. However, for example, in a case where the agricultural machine 1 is a combine or a transplanter, the agricultural machine 1 may include the working device 2 configured to perform corresponding work. For example, in the case where the agricultural machine 1 is a combine, the working device 2 includes a reaper to reap crops or the like, a grain thresher to thresh grain, and/or the like. In the case where the agricultural machine 1 is a rice-planter, the working device 2 includes a planting device to plant seedlings.

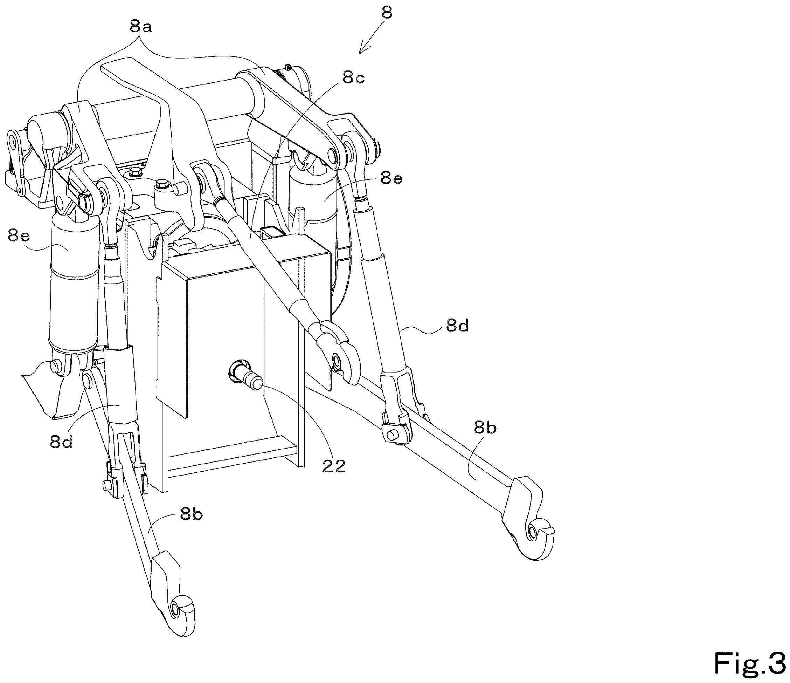

FIG. 3 is a perspective view of the linkage 8. As illustrated in FIG. 3, the linkage 8 includes lift arms 8a, lower links 8b, a top link 8c, lift rods 8d, and lift cylinders 8e.

Front ends of the lift arms 8a are mounted rotatably upward and downward to an upper rear portion of a casing (transmission casing) accommodating the transmission 20. The lift arms 8a are rotated (raised and lowered) by actuation of the lift cylinders 8e. The lift cylinders 8e respectively include hydraulic cylinders. The lift cylinders 8e are connected to respective hydraulic paths connected to a corresponding control valve (not illustrated) to supply the control valve with hydraulic fluid discharged from the hydraulic pump (not illustrated). The control valve is, for example, a two-position switching valve including a solenoid valve. The lift cylinders 8e are actuated (extended and retracted) with hydraulic fluid supplied from the control valve based on a control signal outputted from the later-discussed first controller 40.

As illustrated in FIG. 3, front-end potions of the lower links 8b are mounted rotatably upward or downward to a lower rear portion of the transmission 20. A front-end portion of the top link 8c is mounted rotatably upward or downward to the rear portion of the transmission 20 above the lower links 8b. The lift rods 8d connect the lift arms 8a and the lower links 8b, respectively. Rear portions of the lower links 8b and a rear portion of the top link 8c each include a hook.

As the lift cylinders 8e are actuated (retracted or extended), the lift arms 8a move up or down together with the lower links 8b connected to the lift arms 8a via the lift rods 8d. Thus, the working device 2 are rotated upward or downward (raised or lowered) with respect to front portions of the lower links 8b as fulcrums.

As illustrated in FIG. 1, the agricultural machine 1 includes a steering system 11. The steering system 11 includes a steering wheel 12, a rotation shaft (steering shaft) 13 to be rotated as the steering wheel 12 is rotated, and an assist mechanism (power steering mechanism) 14 to assist a steering operation of the steering wheel 12.

The assist mechanism 14 includes a steering control valve 15 and a steering cylinder 16. The steering control valve 15 is, for example, a three-position switching valve switchable via movements of a spool or the like. The steering control valve 15 is also switchable via steering rotation of the steering shaft 13. The steering cylinder 16 is connected to arms (knuckle arms) 17 to change orientations of the front wheels 7F. Thus, by rotating the steering wheel 12, a position and an opening amount of the steering control valve 15 are changed, and the steering cylinder 16 is extended or retracted leftward or rightward according to the switching position and the opening amount of the steering control valve 15, and the steered direction of the front wheels 7F is changed. Note that the steering system 11 as described above is an example and is not limited to the above-described configuration.

As illustrated in FIG. 1, the agricultural machine includes a first position detector 30. In other words, the assistance system S for the agricultural machine 1 includes a first position detector 30. The first position detector 30 is provided on or in the agricultural machine 1, and is configured to detect a vehicle-body position VP which is a position of the agricultural machine 1. The first position detector 30 is configured to detect a self-position thereof (detected position information such as data indicated by a latitude and longitude, data indicated by coordinates (X axis and Y axis)) as the vehicle-body position VP via a satellite positioning system (positioning satellite) such as D-GPS, GPS, GLONASS, Hokuto, Galileo, Michibiki. That is, the first position detector 30 receives a satellite signal (indicating a position of a GPS satellite, a time when the signal is transmitted, correction information and/or the like) transmitted from a GPS satellite, and detects the vehicle-body position VP based on the satellite signal.

As illustrated in FIG. 1, the agricultural machine 1 includes a detector 31. In other words, the assistance system S for the agricultural machine 1 includes the detector 31 provided on or in the agricultural machine 1. The detector 31 is configured to detect operation information on an operation of the agricultural machine 1 and/or environmental information on an environment around the agricultural machine 1. The operation information on an operation of the agricultural machine 1 includes information indicating an operation state of the agricultural machine 1 such as a rotational frequency of the prime mover 4 and/or a vehicle speed of the traveling device 3. The environmental information on an environment around the agricultural machine 1 is information indicating a state of environment around the agricultural machine 1 such as a captured image of the environment around the agricultural machine 1 and/or a distance between the agricultural machine 1 and an obstacle in the environment around the agricultural machine 1.

The detector 31 includes a plurality of sensors. The sensors of the detector 31 to detect the operation information on an operation of the agricultural machine 1 include, for example, a remaining amount detection sensor 31a, a prime mover rotation sensor (rotation sensor) 31b, an acceleration sensor 31c, a braking sensor 31d, an angle sensor 31e, a PTO rotation sensor (rotation sensor) 31f, a speed sensor 31g, and a posture detection sensor 31h. The detector 31 also includes a plurality of sensing devices 31i to detect the environmental information on an environment around the agricultural machine 1.

The remaining amount detection sensor 31a is a sensor to detect a remaining amount of an energy source (fuel, electricity or the like driving the prime mover 4) of the agricultural machine 1, and the prime mover rotation sensor 31b is a sensor to detect the rotational frequency of the prime mover 4. The acceleration sensor 31c is configured to detect an operation amount of an accelerator (acceleration pedal, acceleration lever, or the like), and the braking sensor 31d is configured to detect an operation of a braking operator (braking pedal and/or the like). The angle sensor 31e is configured to detect an angle of the lift arms 8a, and the PTO rotation sensor 31f is configured to detect a rotational frequency of the PTO shaft 22. The speed sensor 31g is configured to detect a traveling speed (vehicle speed) of the traveling body 3, and the posture detection sensor 31h is configured to detect a roll angle, a pitch angle and a yaw angle of the traveling body 3. The plurality of sensing devices 31i are configured to sense environment around the agricultural machine 1.

Sensors and devices included in the detector 31 are not limited to the sensors described above, and combination and configuration of the sensors and devices are not limited to the above-described configurations.

The following describes the sensing devices 31i in detail. The plurality of sensing devices 311i are devices to sense an environment around the agricultural machine 1. The plurality of sensing devices 31i create, via sensing, data to be used to create images. The plurality of sensing devices 31i include at least one optical sensor and/or at least one sonic sensor, a signal processing circuitry and/or the like. The at least one optical sensor of the plurality of sensing devices 31i includes, for example, at least one imaging device 31i1 such as a camera, and/or at least one Light Detection And Ranging (LiDAR) 31i2.

The imaging device 31i1 includes a CCD camera with a Charge Coupled Devices (CCD) image sensor installed therein, a CMOS camera with a Complementary Metal Oxide Semiconductor (CMOS) image sensor installed therein, or the like. The imaging device 31i1 captures one or more images of the environment around the agricultural machine 1, and creates an image signal (data). The signal processing circuitry detects presence or absence of a target object, a position of the target, and a category or the like of the target object based on the image signal outputted from the imaging device 31i1.

The LiDAR (laser sensor) 31i2 radiates pulsatile measurement light (laser light) millions of times per second from a light source such as a laser diode, scans the measurement light reflected by a rotating mirror in a horizontal direction and/or a vertical direction to project the light to a detection area. Then, the LiDAR 31i2 uses a photoreceptor to receive the light reflected from the target object to which the measurement light is projected. The signal processing circuitry determines the presence or absence of the target, the position of the target, and the category or the like of the target based on a photoreception signal (data) outputted from the photoreceptor of the LiDAR 31i2. The signal processing circuitry detects a distance to the target based on the period of time between the radiation of the measurement light from the LiDAR 31i2 and the reception of the reflected light (using Time of Flight (ToF) method).

The at least one sonic sensor of the plurality of sensing devices 31i includes an aerial ultrasonic sensor such as sonar. The aerial ultrasonic sensor transmits a measurement wave (supersonic wave) via a transmitter to a detection area, and receives, via a receiver, a reflected wave that is the measurement wave reflected by the target object. The signal processing circuitry detects the presence or absence of the target object, the position of the target object, the category of the target object, and/or the like based on a signal (data) outputted from the receiver. The signal processing circuitry detects (using ToF method) the distance to the object based on a period of time between the transmission of the measurement wave from the aerial supersonic sensor and the reception of the reflected wave.

The following describes an exemplary case, as illustrated in FIG. 1, where the plurality of sensors 31i include a plurality of imaging devices 31i1 and a plurality of LiDARs 31i2 according to the present example embodiment. The plurality of imaging devices 31i1 include at least ones on the front portion and the rear portion of the traveling body 3 to capture images of environments forward and rearward of the agricultural machine 1. In the example embodiment illustrated by FIG. 20, the plurality of imaging devices 31i1 are attached to the cabin 9. However, one or more of the imaging devices 31i1 to capture images of the environment forward of the agricultural machine 1 may be provided on an upper portion of the driver's seat 10 or the like.

As illustrated in FIG. 1, the agricultural machine 1 includes a first controller 40, a first storage 41, a first operator 42, and a first communicator 43. The first controller 40 is configured or programmed to perform various controls of the agricultural machine 1, and includes a CPU(s), an electrical/electronic circuit(s) and/or the like.

The first storage 41 includes a nonvolatile memory or the like, and is configured to store various programs and/or the like and various pieces of information related to the agricultural machine 1.

The first operator 42 is configured to receive user operations. The first operator 42 is connected to the first controller 40, and is configured to output an operation signal according to the user operation. The first operator 42 includes, for example, an accelerator, a brake operator, a clutch, and a speed-changer (speed-change lever, speed-change switch or the like). The first controller 40 is configured or programmed to control the rotational frequency of the prime mover 4 based on an operation signal inputted from the accelerator. More specifically, the first controller 40 is configured or programmed to control the rotational frequency of the prime mover 4 based on a control map prestored in the first storage 41.

Operation members included in the first operator 42 are not limited to the members as described above, and the first operator 42 may include touchpad or hardware type switches and/or the like. The first operator 42 may include the steering system 11.

The first communicator 43 performs direct or indirect wireless communication with other devices (for example, a server 60 as described later) via a communication standard IEEE802. 11 Wireless Fidelity (Wi-Fi, registered trademark), Bluetooth (registered trademark) Low Energy (BLE), Low power wide area (LPWA), Low-power wide-area network (LPWAN), and/or the like. The first communicator 43 performs direct wired communication with other devices (for example, a display terminal 50 as described later). As another example, the first communicator 43 may include a communication circuit capable of wirelessly communicating with an external device outside thereof via, for example, a mobile phone communication network, a data communication network or the like.

As illustrated in FIG. 1, the agricultural machine 1 includes a display terminal 50. The display terminal 50 is configured to display pieces of information related to the agricultural machine 1. The display terminal 50 is provided in the vicinity of the user boarding the agricultural machine 1. As illustrated in FIG. 1, the display terminal 50 includes a first display screen 51, a second controller 52, a second storage 53, and a second communicator 54.

The first display screen 51 defines a monitor provided in the vicinity of the driver's seat 10. More specifically, the first display screen 51 is provided at a position (for example, forward, diagonally forward, or sideward of the driver's seat 10) where it is visible by the user when sitting on the driver's seat 10. The first display screen 51 is rectangular, includes a panel(s) such as a liquid crystal display (LCD) or an organic light emitting diode (OLED) display, and can transition to one of various screens.

The second controller 52 is configured or programmed to perform various controls of the display terminal 50, and includes a CPU(s), an electric/electronic circuit(s) and/or the like. The second controller 52 causes the first display screen 51 to display the pieces of information related to the agricultural machine 1. More specifically, the second controller 52 causes the first display screen 51 to display the pieces of information related to the agricultural machine 1, for example, which is received by the second controller 52 from the first controller 40 or the first storage 41 via the second communicator 54, or which is stored in the second storage 53.

The second storage 53 includes a nonvolatile memory and/or the like, and is configured to store various programs and/or the like and various pieces of information related to the display terminal 50. For example, the second storage 53 prestores various control programs and data.

The second communicator 54 communicates via wire with the first communicator 43. For example, the second communicator 54 receives, via the first communicator 43, data of the vehicle-body position VP and/or the like detected by the first position detector 30. As another example, the second communicator 54 may perform direct or indirect wireless communication with the first communicator 43, other one or more devices (for example, a server 60 as described later) and/or the like via a communication standard IEEE802. 11 Wireless Fidelity (Wi-Fi, registered trademark), BLE, LPWA, LPWAN, and/or the like.

The display terminal 50 is configured to display image(s) on the first display screen 51, and receive operations on the displayed image(s). In the present example embodiment, the first display screen 51 includes a touch panel (not illustrated) operable by touch-operation, and the second controller 52 is configured or programmed to acquire an operation signal of the touch-operation. The touch panel is provided at a front side of the first display screen 51, and is configured to receive the touch-operation on the first display screen 51. The second controller 52 is configured or programmed to cause, for example, the first display screen 51 to display a settings screen, and receive the operation on the displayed image via touch-operation of the touch panel.

The server 60 is a fixed terminal, such as a fixed computer, provided outside of the agricultural machine 1. The server 60 is, for example, a fixed terminal provided in a farmhouse, a farming company, an agricultural machine maker, an agricultural cooperative or the like. The server 60 is configured to store various pieces of information, and manage the stored pieces of information. The server 60 is configured to, for example, manage plans for work carried out by the user with the agricultural machine 1.

As illustrated in FIG. 1, the server 60 includes a third controller 61, a third storage (database) 62 and a third communicator 63. The third controller 61 is configured or programmed to perform various controls related to the server 60, and, for example, cause the third storage 62 to store (record) pieces of information received by the third communicator 63. The third controller 61 includes electric/electronic component(s) and program(s) and/or the like.

The third storage 62 includes a nonvolatile memory and/or the like to store various programs and various pieces of information.

The third communicator 63 is configured to perform direct or indirect wireless communication with the first communicator 43 of the agricultural machine 1, a management terminal 81 as described later and/or the like via a communication standard IEEE802.11 Wireless Fidelity (Wi-Fi, registered trademark), BLE, LPWA, LPWAN, and/or the like. As another example, the third communicator 63 may include a communication circuitry to wirelessly communicate with the first communicator 43 and/or the like via, for example, a mobile phone communication network, a data communication network and/or the like.

As illustrated in FIG. 1, the assistance system S for the agricultural machine 1 includes a map creator 55. The map creator 55 is configured or programmed to create an entire map. In the present example embodiment, the map creator 55 is configured or programmed to create an entire map indicating the interior of the agricultural field G and the exterior of the agricultural field G by creating an internal map and an external map. Especially, the map creator 55 is configured or programmed to create the entire map by expanding a map (internal map or external map) that has not been created from an internal map or an external map that has already been created, or by combining a new map (internal map or external map) with a map (internal map or external map) which has already been created.

The internal map indicates at least one internal area E1 of the agricultural field G. The internal area E1 is an area defining each of individual agricultural fields G, and in which the agricultural machine 1 performs work. The internal map includes pieces of positional information (data of locations indicated using latitude and longitude, data of locations indicated using coordinates (X axis and Y axis) and/or the like) about the internal areas E1 corresponding to the respective agricultural fields G. The positional information about each of the internal areas E1 included in the internal map includes positional information indicating, for example, a contour of the corresponding internal area E1. Identification information to identify each of the internal areas E1 is associated with the corresponding positional information included in the internal map.

The external map indicates at least one external area E2 outside of the agricultural field G. The external area E2 is an area related to the agricultural machine 1 outside of the agricultural field(s) G. In other words, the external area E2 is an area excluding the agricultural field(s) G, and in which at least movement or travel of the agricultural machine 1 may occur. There are a plurality of categories for different external areas E2, and each category (category indicating a type of the corresponding external area E2, hereinafter referred to as "area category") is categorized according to an operation or action of the agricultural machine 1, a process performed by the user for the agricultural machine 1, and/or the like.

The external area E2 includes, for example, a road area defining a road such as a public road or a farm road, a storage area where the agricultural machine 1 is housed or stored, and a standby area where the agricultural machine 1 is stopped for standby. In the following description, external areas E2 defining farm roads each may be referred to as "first road area", and external areas E2 defining public roads each may be referred to as "second road area". Further, external areas E2 other than the road areas (e.g., storage areas, standby areas and/or the like) each may be referred to "off-road area".

The positional information on each of the external areas E2 included in the external map is associated with one of the area categories. Each external area E2 may be defined as overlapping one or more other external areas E2. In other words, a contour of one external area E2 may entirely or partly overlap or cross a contour of another external area E2.

The external map includes pieces of positional information (data of locations indicated using latitude and longitude, data of locations indicated using coordinates (X axis and Y axis) and/or the like) on the respective external areas E2. The positional information on each of the external areas E2 included in the external map indicates, for example, a contour of the corresponding external area E2. Identification information to identify each of the external areas E2 is associated with the corresponding positional information included in the external map.

In the present example embodiment, the map creator 55 is provided in the display terminal 50. More specifically, the map creator 55 is included in the second controller 52 of the display terminal 50. The map creator 55 includes electric/electronic component(s) and program(s) and/or the like provided in the second controller 52, and program(s) or the like installed in the second storage 53. Note that the map creator 55 is not limited to that included in the second controller 52 of the display terminal 50, and may be provided in another device, such as the server 60, which is configured or programmed to receive the vehicle-body position VP detected by the first position detector 30 or the detection signal about a target object detected by the detector 31.

In the following, each of the internal map and external map may be referred to as "area map" representative of them, and each of the internal areas E1 and external areas E2 may be referred to as "area" representative of them.

The map creator 55 is configured or programmed to create an area map (internal map or external map) based on the vehicle-body position VP of the agricultural machine 1 detected by the first position detector 30 during travel of the agricultural machine 1 in a corresponding area (internal area E1 or external area E2). Especially, when the agricultural machine 1 travels across areas, the map creator 55 is configured or programmed to successively create respective area maps based on the vehicle-body positions VP so as to create an entire map including the area maps.

In the present example embodiment, the map creator 55 is configured or programmed to, when the agricultural machine 1 travels in an internal area E1, create a corresponding internal map based on the vehicle-body position VP detected by the first position detector 30. The map creator 55 is configured or programmed to, when the agricultural machine 1 travels in an external area E2, create a corresponding external map based on the vehicle-body position VP detected by the first position detector 30.

When the agricultural machine 1 moves from a first area corresponding to an external map or an internal map to a second area which is adjacent to the first area and for which the map creator 55 has not created a corresponding map, the map creator 55 is configured or programmed to create an area map corresponding to the second area by expanding the area map corresponding to the second area from an area map corresponding to the first area so as to create the entire map.

On the other hand, when the agricultural machine 1 travels to move from a first area corresponding to an external map or an internal map to a second area which is adjacent to the first area and for which the map creator 55 has created a corresponding area map, the map creator 55 is configured or programmed to combine the area map corresponding to the first area and the area map corresponding to the second area so as to create the entire map including combination of the area maps. At this time, the map creator 55 may be configured or programmed to define at least one entrance between the first area and the second area.

Thus, the map creator 55 is configured or programmed to increase a range of one or more areas E1 and/or one or more areas E2 indicated in an entire map by expanding, from a first area E1 or E2 for which a corresponding map has already been created, a new map corresponding to a second area E1 or E2 adjacent to the first area E1 or E2, and/or by combining a map corresponding to a first area E1 or E2 with another map corresponding to a second area E1 or E2 adjacent to the first area E1 or E2.

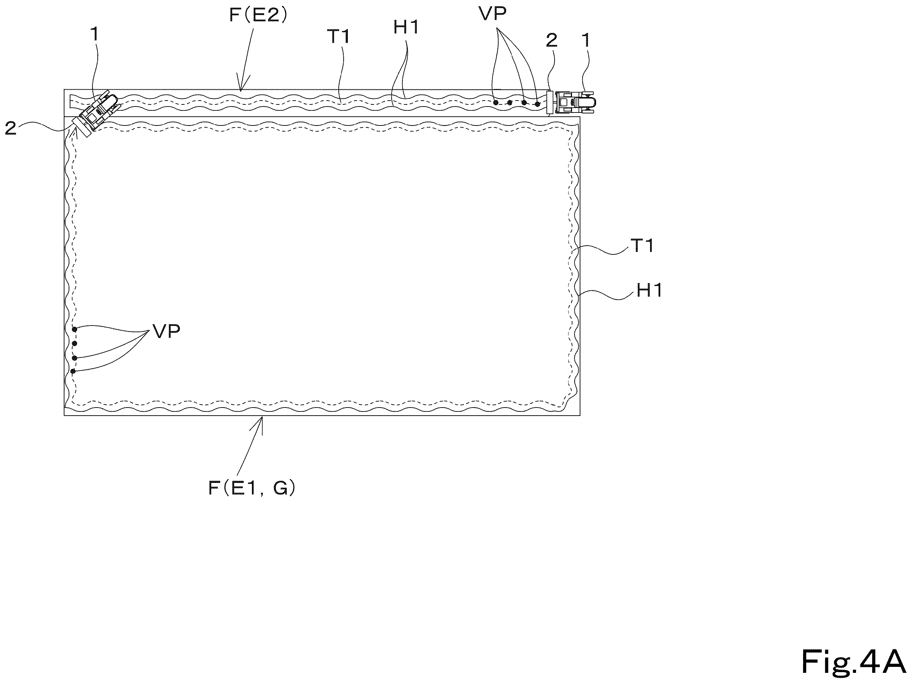

FIG. 4A illustrates a process in which the agricultural machine 1 moves from an internal area E1 for which a new internal map has been created to an external area E2 for which no external map has been created. Specifically, FIG. 4A illustrates the agricultural machine 1 entering the external area E2 (road area, farm road) which is adjacent to the internal area E1 after it has traveled in the internal area E1 (agricultural field G) to cause the map creator 55 to create an internal map corresponding to the internal area E1. Then, the agricultural machine 1 travels in the road area, and the map creator 55 creates an external map corresponding to the road area. Thus, in the example embodiment illustrated in FIG. 4A, the map creator 55 is configured or programmed to create a new entire map by expanding, from a map (internal map) indicating the agricultural field G, an additional map (road map) indicating the farm road which is adjacent to the agricultural field G.

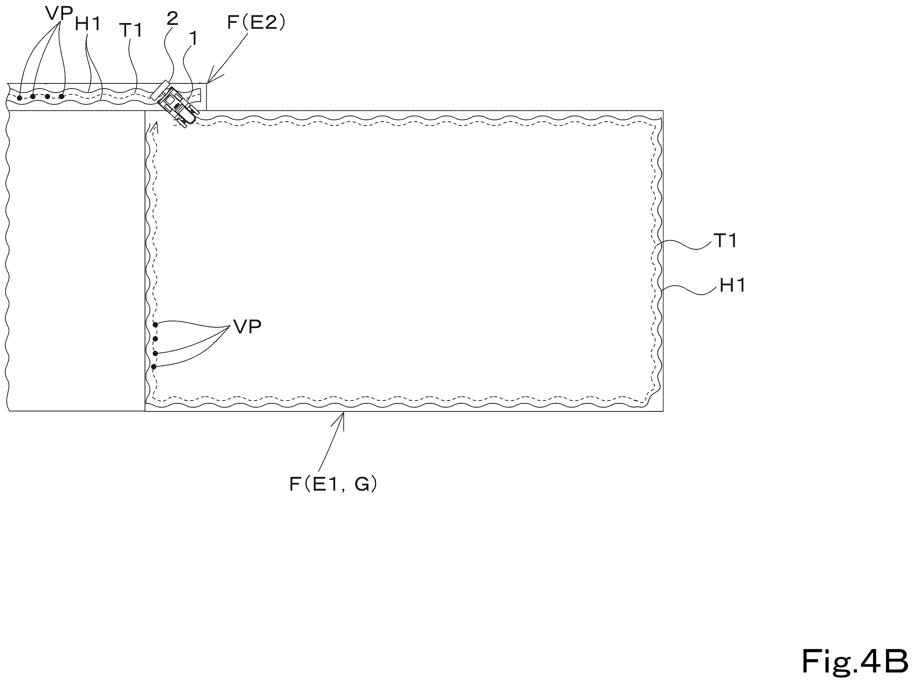

FIG. 4B illustrates a process in which the agricultural machine 1 moves from an external area E2 for which a new external map has been created to an internal area E1 for which no internal map has been created. Specifically, FIG. 4B illustrates the agricultural machine 1 entering the internal area E1 (agricultural field G) which is adjacent to the external area E2 after it has traveled in the external area E2 (road area, farm road) to cause the map creator 55 to create an external map corresponding to the external area E2. Then, the agricultural machine 1 travels in the internal area E1 so that the map creator 55 creates an internal map corresponding to the internal area E1. Thus, in the example embodiment illustrated in FIG. 4B, the map creator 55 is configured or programmed to create a new entire map by expanding, from a map (external map) indicating the farm road, an additional map (internal map) indicating the agricultural field G which is adjacent to the farm road.

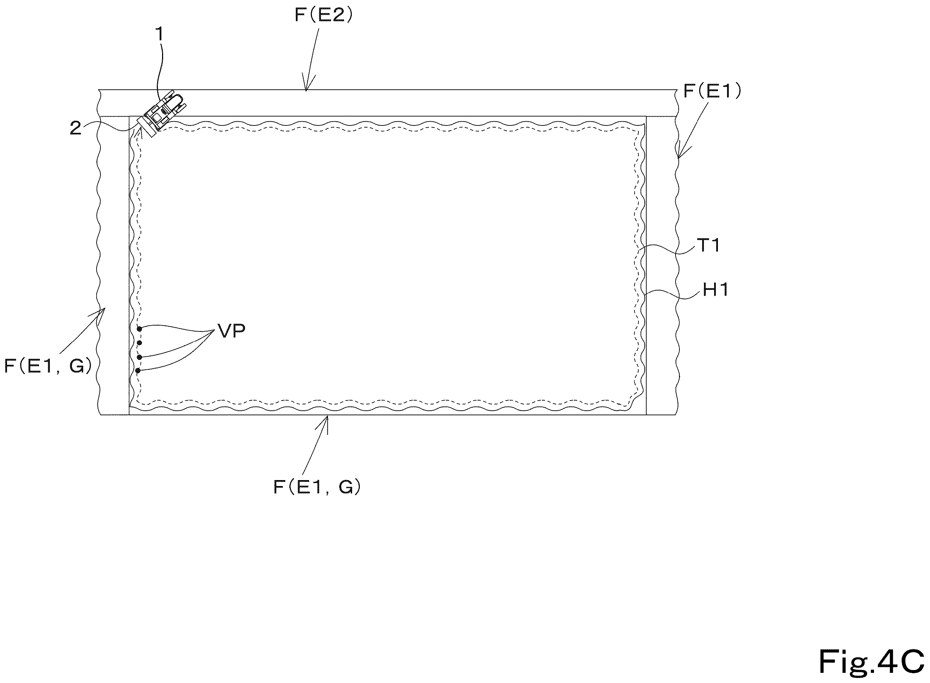

FIG. 4C illustrates a process in which the agricultural machine 1 moves from an internal area E1 for which a new internal map has been created to an external area E2 for which an external map has previously been created. Specifically, FIG. 4C illustrates the agricultural machine 1 entering the external area E2 (road area, farm road) which is adjacent to the internal area E1 after it has traveled in the internal area E1 to cause the map creator 55 to create an internal map corresponding to the internal area E1 (agricultural field G). In this case, because there is the previously created external map corresponding to the external area E2 into which the agricultural machine 1 is entering to travel therein, the map creator 55 is configured or programmed to define the internal map and the external map as open to each other via a passageway therebetween instead of additionally creating an external map corresponding to the road area. That is, the map creator 55 is configured or programmed to combine the internal map and the external map. Thus, in the exemplary process illustrated in FIG. 4C, the map creator 55 is configured or programmed to combine the map indicating the agricultural field G (internal map) and the map indicating the farm road which is adjacent to the agricultural field G (road map).

More specifically, regarding the creation of an area map by the map creator 55, the map creator 55 is configured or programmed to, when the agricultural machine 1 travels in an area E1 or E2, acquire a plurality of detected locations that are the vehicle-body positions VP detected by the first position detector 30. In other words, the map creator 55 is configured or programmed to acquire a track of the agricultural machine 1 having traveled in the area E1 or E2. That is, the map creator 55 is configured or programmed to compute positional information about each of one or more areas E1 and/or one or more areas E2 based on the track of the agricultural machine 1 having traveled in corresponding one of the one or more areas E1 and/or one or more areas E2, and create an area map based on the computed positional information. The map creator 55 is configured or programmed to compute, as each of area maps, positional information about each of the one or more areas E1 and/or one or more areas E2 including data of locations indicated by latitude and longitude and/or by coordinates (X axis and Y axis), and store the computed positional information in the second storage 53. Thus, the map creator 55 creates the area maps.

The map creator 55 is configured or programmed to determine, based on prescribed condition(s), whether each vehicle-body position VP is in an internal area E1 or in an external area E2, and create an internal map or an external map based on the vehicle-body position VP that is determined as being in the internal area E1 or the external area E2. When a vehicle-body position VP is in an external area E2, the map creator 55 is configured or programmed to determine, based on the prescribed condition(s), a category (area category) of the external area E2 where this vehicle-body position VP is located, and associate the determined area category with the external area E2. That is, when traveling positions VP are detected during traveling of the agricultural machine 1 across a plurality of areas, the map creator 55 is configured or programmed to create an area map corresponding to each of the areas based on at least one of the detected vehicle-body positions VP which is determined as being in the corresponding area.

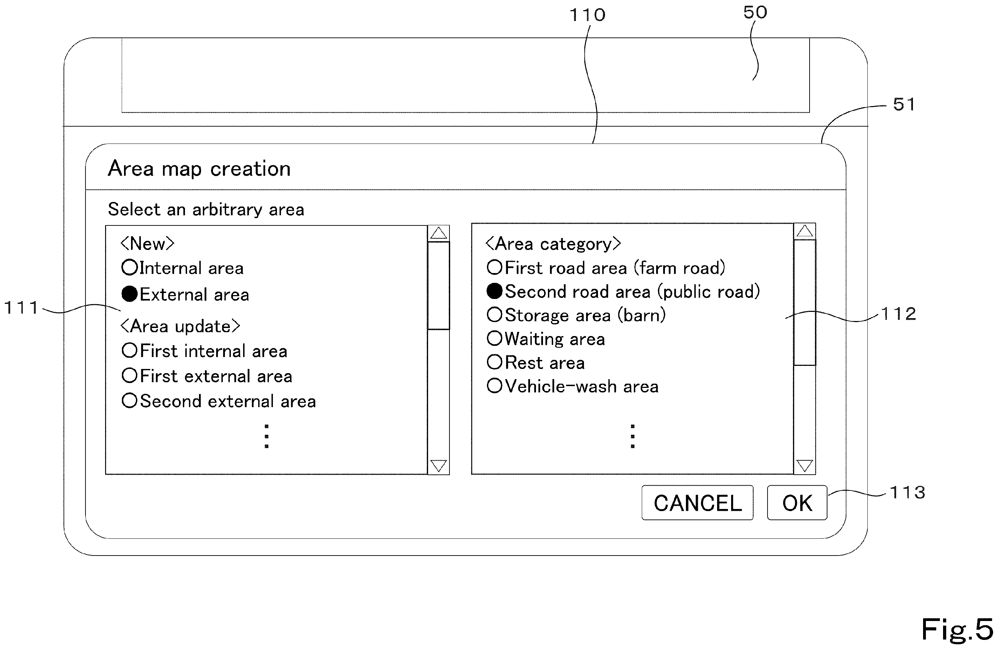

The map creator 55 is configured or programmed to receive a designation of an area as the internal area E1 or the external area E2, and determine whether corresponding vehicle-body position(s) VP is/are in the internal area E1 or in the external area E2. When the map creator 55 receives a designation of an area as the external area E2, the map creator 55 is configured or programmed to receive a designation of an area category, and determine which of the categories corresponds to the external area E2 in which the vehicle-body position VP is. In the present example embodiment, the map creator 55 is configured or programmed to receive, based on information inputted by operation on the first display screen 51, a designation of an area as an internal area E1 or an external area E2, and a designation of an area category. FIG. 5 illustrates an example of a first selection screen 110. The first display screen 51 displays a first selection portion 111, a second selection portion 112, and a confirmation button 113.

The first selection portion 111 is a displayed image to be used to designate an area as an internal area E1 or an external area E2. In the example of the first selection screen 110 illustrated in FIG. 5, the first selection portion 111 indicates, as a list of options, a list of areas E1 and E2 including a new internal area E1, a new external area E2, one or more stored internal areas E1 included in one or more internal maps stored in the second storage device 53, and one or more stored external areas E2 included in one or more external maps stored in the second storage 53.

The second selection portion 112 is a displayed image to be used to designate an area category corresponding to a selected external area E2. As illustrated in FIG. 5, the second selection portion 112 indicates a list of area categories.

The confirmation button 113 is a displayed image to be used to confirm which is selected from the areas E1 and E2 listed in the first selection portion 111, and which is selected from the area categories listed in the second selection portion 112. Thus, the map creator 55 is configured or programmed to, when the user operates the first selection portion 111, the second selection portion 112 and the confirmation button 113, receive a designation of an area as a selected area E1 or E2 and a designation of a selected area category for the designated area upon receiving a button-operation of the confirmation button 113.

The map creator 55 is configured or programmed to, when the new internal area E1 or the new external area E2 is selected at the first selection portion 111, receive a designation of an area as the selected new area E1 or E2 and define new identification information corresponding to the selected new area E1 or E2.

On the other hand, the map creator 55 is configured or programmed to, when the stored internal area E1 or external area E2 as an area stored in the second storage 53 is selected at the first selection portion 111, receive a designation of an area as the selected stored area E1 or E2, and acquire identification information corresponding to the area designated as the stored area E1 or E2 from the second storage 53.

The map creator 55 is configured or programmed to, when an external area E2 is selected at the first selection portion 111, receive a designation of the corresponding area category selected by the user from the displayed list of area categories. The map creator 55 is configured or programmed to, when receiving the designation of the selected area category, associate the area category selected at the second selection portion 112 with the acquired identification information about the external area E2 selected at the first selection portion 111. The map creator 55 is configured or programmed to associate the selected area category with the corresponding external area E2 by adding or rewriting an arbitrary character string indicating the area category in management information assigned to the corresponding external area E2.

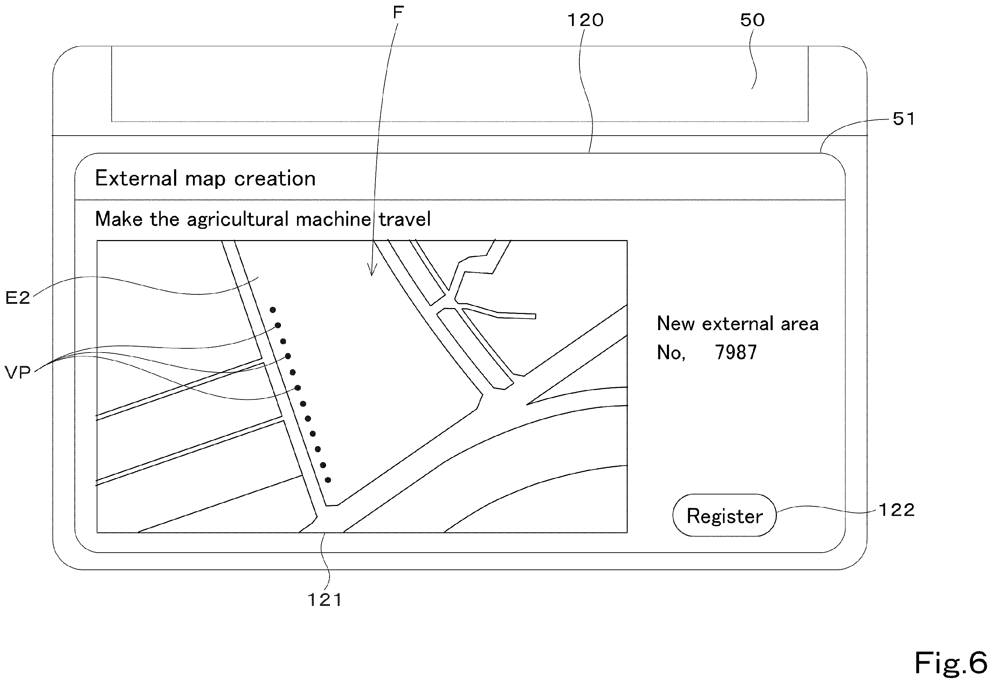

When the confirmation button 113 is operated and the map creator 55 acquires corresponding identification information and a corresponding area category about the selected and designated external area E2, the map creator 55 is configured or programmed to cause the first display screen 51 to display the first creation screen 120 as illustrated in FIG. 6. The first creation screen 120 starts acquiring a track of the agricultural machine 1, i.e., a plurality of vehicle-body positions VP defining the track, to create a map corresponding to the designated area E1 or E2 as selected at the first selection portion 111. That is, the confirmation button 113 functions as an operation tool operable to define a start point of the track of the agricultural machine 1.

FIG. 6 illustrates an example of a first creation screen 120. The first creation screen 120 displays a first field display portion 121 and a first registration button 122. The first field display portion 121 indicates a field F including an area E1 or E2 designation of which has been received by the map creator 55. Positional information such as latitude and longitude and/or coordinates (X axis and Y axis) is associated with the agricultural field F. When the first creation screen 120 is displayed in the first display screen 110, the user operates the agricultural machine 1 to cause the agricultural machine 1 to travel in response to the area E1 or E2 selected on the first selection screen 110.

More specifically, when the user selects an internal area E1 or an off-road area on the first selection screen 110, the user causes the agricultural machine 1 to move around along a contour of the corresponding area E1 or E2. When the user selects a road area on the first selection screen 110, the user causes the agricultural machine 1 to travel along a route on a public road or a farm road in the corresponding road area.

In the present example embodiment, the track of the agricultural machine 1 when an internal area E1 or an off-road area is selected on the first selection screen 110 is different from the track of the agricultural machine 1 when a road area is selected on the first selection screen 110. As illustrated in the first area (internal area E1) in FIG. 4A, in the second area (internal area E1) in FIG. 4B and in the first area (internal area E1) in FIG. 4C, when an internal area E1 or an off-road area is selected on the first selection screen 110, the track of the agricultural machine 1 is indicated as a first line T1 that extends to pass a plurality of vehicle-body positions VP in order of detection (acquisition) and return to an initially detected vehicle point VP.

The map creator 55 is configured or programmed to acquire vehicle-body positions VP detected by the first position detector 30 during a predetermined period, record the vehicle-body positions VP into the second storage 53 at appropriate times and cause the first field display portion 121 to display the vehicle-body positions VP at appropriate times.

The first registration button 122 is a displayed image operable to define an end point of the track of the agricultural machine 1. Thus, the map creator 55 is configured or programmed to, when the agricultural machine 1 ends traveling thereof in an external area E2 and the user operates the first registration button 122, compute a track of the agricultural machine 1 based on the plurality of recorded vehicle-body positions VP.

In this regard, the vehicle-body position VP is a GPS position of the first position detector 30, and the track is a trajectory of the GPS position. Thus, the map creator 55 is configured or programmed to, when the user selects an internal area E1 or an off-road area on the first selection screen 110, offset the track outward by an offset amount equal to an interval in a vehicle-body widthwise direction between a GPS position in the agricultural machine 1 and an outer-side end of the agricultural machine 1 or of the working device 2 in the vehicle-body width direction (in FIGS. 4A to 4C, the working device 2 is connected to the agricultural machine 1, and the agricultural machine 1 goes around clockwise in the areas E1 and E2, therefore the "outer end" means a left end of the working device 2) and computes positional information about a second line H1 defining a contour of the area E1 or E2.

In the present example embodiment, a GPS position of the first position detector 30 is at a center of the agricultural machine 1. Thus, in a case where the working device 2 is connected to the agricultural machine 1, when the width directional center of the agricultural machine 1 and the width directional center of the working device 2 match in the width direction, the above-mentioned offset amount is equal to half of the full lateral width (length in the width direction) of the working device 2 or half of a working width (length in the width direction of a working area N within which the working device 2 affects on the areas E1 and E2) of the working device 2. On the other hand, when the working device 2 is not connected to the agricultural machine 1, the above-mentioned offset amount is equal to half of the full lateral width (length in the width direction) of the agricultural machine 1.

The map creator 55 may be configured or programmed to receive, via the first creation screen 120, selection regarding whether the working device 2 is connected to the agricultural machine 1. Further, when the agricultural machine 1 includes the detector 31 to detect whether the working device 2 is attached to the agricultural machine 1, the map creator 55 may be configured or programmed to confirm whether the working device 2 is attached to the agricultural machine 1 based on a detection signal from the detector 31.

On the other hand, as illustrated in the second area (road area) in FIG. 4A or in the first area (road area) in FIG. 4B, when one of the one or more road areas on the first selection screen 110 is selected and the agricultural machine 1 travels in the selected road area, the track of the agricultural machine 1 is made as a first line T1 extends through a plurality of vehicle points VP in order of detection (acquisition).

The map creator 55 is configured or programmed to offset a track to both sides in the vehicle body width direction by an offset amount equal to an interval in the lateral widthwise direction between a GPS position in the agricultural machine 1 and each of both side edges of the agricultural machine 1 or of the working device 2 (in FIGS. 4A to 4C, the working device 2 is connected to the agricultural machine 1, therefore the "side edges" mean left and right ends of the working device 2), and compute positional information about second lines H1 defining contours of the road area defined by connecting a starting point and an ending point of each of the offset tracks on the both sides. Thus, when the working device 2 is connected to the agricultural machine 1, when the width directional center of the agricultural machine 1 and the width directional center of the working device 2 match in the width direction, the above-mentioned offset amount is equal to half of the full lateral width (length in the width direction) of the working device 2 or equal to half of a working width (a length in the width direction of a working area N within which the working device 2 affects on the agricultural field G) of the working device 2. On the other hand, when the working device 2 is not connected to the agricultural machine 1, the above-mentioned offset amount is equal to half of the full lateral width (length in the width direction) of the agricultural machine 1.

The map creator 55 is configured or programmed to, after computing the positional information about the second line H1, define the second line H1 formed in the above-mentioned way as a contour (outline) of the area (internal area E1 or external area E2), create an area map including positional information about the area E1 or E2 defined by the contour, associate the area map with identification information about the corresponding area E1 or E2, and store the area map in the second storage 53.

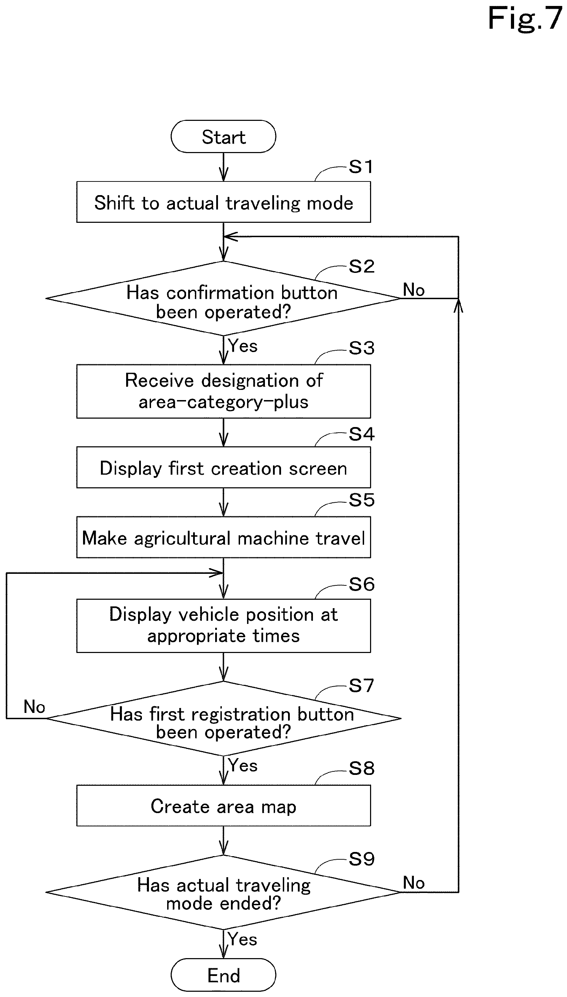

A process flow to create an entire map (area map) performed by the map creator 55 will now be described with reference to FIG. 7. FIG. 7 illustrates a flowchart of processes to create an entire map performed by the map creator 55. A series of processes indicated in FIG. 7 are performed by a CPU based on software program(s) prestored in a memory of the second controller 52. First, when the user performs a predetermined operation on the display terminal 50, the map creator 55 shifts to a mode (actual traveling mode) to create an area map based on vehicle-body positions VP detected as the agricultural machine 1 travels in an area E1 or E2 (S1). More specifically, the map creator 55 causes the first display screen 51 to display the first selection screen 110. When the user operates the first selection portion 111 and the second selection portion 112 and then operates the confirmation button 113 (S2: YES), the map creator 55 receives a designation of either one internal area E1 or one external area E2 and a designation of one area category via the first selection screen 110 (S3).

Then, the map creator 55 causes the first display screen 51 to display the first selection screen 120 (S4). The user operates the agricultural machine 1, and causes the agricultural machine 1 to travel in response to the selection of the area E1 or E2 via the first selection screen 110 (S5). The map creator 55 periodically acquires vehicle-body positions VP detected by the first position detector 30, record the acquired vehicle-body positions VP in the second storage 53 at appropriate times, and cause the first field display potion 121 to display the vehicle-body positions VP at appropriate times (S6).

When the user operates the first recording button 122 (S7: YES), the map creator 55 computes a track of the agricultural machine 1 based on the recorded plurality of vehicle-body positions VP so as to create an area map (S8). Then, the map creator 55 associates the area map with the identification information about the corresponding area E1 or E2, and stores the associated information in the second storage 53. When the map creator 55 creates an external map, the map creator 55 associates the area category selected on the second selection portion 112 with the area map.

Since the user operates the display terminal 50, the map creator 55 repeats Steps S2 to S8 until the user stops the traveling mode (S9: NO).

According to the above processes, the map creator 55 can increase a range of one or more areas E1 and/or one or more areas E2 indicated by the entire map by expanding, from a previously created map corresponding to the first area(s) E1 and/or E2, an additional map corresponding to the second area E1 or E2 which are adjacent to the first area(s) E1 and/or E2, or by combining maps corresponding to one area E1 or E2 and another area E1 or E2 adjacent to each other.

The above-mentioned method to create one or more area maps by the map creator 55 is only an example, and a flow of processes to create one or more area maps is not limited to the above-mentioned example. For example, the map creator 55 may be configured or programmed to, after the agricultural machine 1 travels in an area E1 or E2, display the first selection screen 110 and receive a designation of the area E1 or E2 as one of the indicated one or more internal areas E1 and one or more external areas E2, and a designation of one of the indicated area categories for the external area E2 where the agricultural machine 1 has traveled.

In the above-mentioned embodiment, the map creator 55 is configured or programmed to, based on the information inputted via the first selection screen 110 and the first creation screen 120, determine in which of the indicated one or more internal areas E1 and one or more external areas E2 each vehicle-body position VP is located, and determine which of the categories corresponds to the external area E2 where the vehicle-body position VP is located. However, conditions for the determination are not limited to the above-mentioned conditions.

Additionally or alternatively, for example, in the case where the map creator 55 creates an internal map according to travel of the agricultural machine 1 in an internal area E1 with the working device 2 performing work, the map creator 55 may be configured or programmed to determine whether each vehicle-body position VP is in the internal area E1 or in an external area E2 depending on whether or not the working device 2 performs work. In this example embodiment, the map creator 55 is configured or programmed to, when the angle sensor 31e detects an angle of the lift arms 8a as a working position (a position for the working device 2 to perform work), i.e., when the height of the working device 2 is at the working position, determine that the vehicle-body position VP is in an internal area E1, and is configured or programmed to, when the angle sensor 31e detects the angle of the lift arms 8a as a non-working position (a position at which the working device 2 does not perform work), determine that the vehicle-body position VP is in an external area E2.

Additionally or alternatively, for example, the map creator 55 may be configured or programmed to determine whether a vehicle-body position VP is in an internal area E1 or in an external area E2 according to the rotational frequency of the PTO shaft 22 detected by the PTO rotation sensor 31f. In this case, the map creator 55 is configured or programmed to, when the rotational frequency of the PTO shaft 22 is greater than zero, determine that the vehicle-body position VP is in an internal area E1, and is configured or programmed to, when the rotational frequency of the PTO shaft 22 is zero, determine that the vehicle-body position VP is in an external area E2.

In the above-mentioned example embodiment, the map creator 55 is configured or programmed to, when the agricultural machine 1 travels in each of the areas E1 and E2, acquire the vehicle-body positions VP detected by the first position detector 30 as a plurality of detected locations and create the entire map based on the plurality of detected locations. However, the map creator 55 need only be configured or programmed to acquire at least pieces of positional information about the areas E1 and E2 as detected locations. Thus, the map creator 55 may be configured or programmed to, for example, connect a storage such as a memory with pieces of positional information of a plurality of detected locations prestored therein and the display terminal 50, and acquire the pieces of positional information of the plurality of detected locations from the storage. The map creator 55 may be configured or programmed to acquire, via the second communicator 54 and the first communicator 43, pieces of positional information about a plurality of detected locations from an external server 60 and/or the like. Additionally or alternatively, the map creator 55 may be configured or programmed to acquire positional information (device position DP) about a device (recorder) 70 different from the agricultural machine 1 so as to create the entire map. The following describes a first variation in which the map creator 55 is configured or programmed to acquire a device position DP so as to create an entire map.

As illustrated in FIG. 1, the assistance system S for the agricultural machine 1 includes a recorder 70 different from the agricultural machine 1. The recorder 70 is, for example, a portable terminal held by the user. The portable terminal 70 is, for example, a smartphone (multifunction mobile phone), a tablet, or a PDA.

The portable terminal 70 includes a second display screen 71, a fourth controller 72, a fourth storage 73, a fourth communicator 74, and a second position detector 75. In other words, the assistance system S for the agricultural machine 1 includes a second position detector 75.

More specifically, the second display screen 71 is rectangular, and included in a panel(s), such as a LCD or an OLED display, and is transitable into various screens.

The fourth controller 72 is configured or programmed to perform various controls of the portable terminal 70, and includes a CPU(s), an electric/electronic circuit(s) and/or the like. The fourth controller 72 is configured or programmed to cause the second display screen 71 to display pieces of information.

The fourth storage 73 is a nonvolatile memory or the like, and can store various information related to various programs or the like or the portable terminal 70. For example, the fourth storage 73 prestores various control programs and data.

The fourth communicator 74 performs direct or indirect wireless communication with the first communicator 43 via a communication standard IEEE802. 11 Wireless Fidelity (Wi-Fi, registered trademark), BLE, LPWA, LPWAN, and/or the like. As another example, the fourth communicator 74 may include a communication circuit capable of wirelessly communicating with the exterior thereof via, for example, a mobile phone communication network or a data communication network or the like.

For example, the fourth communicator 74 sends various data, including positional information about the recorder 70 detected by the second position detector 75 to the second communicator 54 via the first communicator 43.

The second position detector 75 detects a device position DP which is a self-position thereof. The second position detector 75 is configured to detect a self-position thereof (positional information including latitude and longitude) as the device position DP via a satellite positioning system (positioning satellite) such as D-GPS, GPS, GLONASS, Hokuto, Galileo, Michibiki. That is, the second position detector 75 receives a satellite signal (position of the positioning satellite, time of transmission, correction information and/or the like) transmitted from the positioning satellite, and detects a position (for example, latitude and longitude), that is a device position DP (positional information) of the portable terminal 70 based on the satellite signal. In addition to the information related to a position of the portable terminal 70, the positional information may include information related to an orientation of the portable terminal 70.

The map creator 55 of the first variant is configured or programmed to create an entire map based on device positions DP detected by the second position detector 75 when the recorder 70 (portable terminal 70 in the present example embodiment) which includes the second position detector 75 moves in the respective areas E1 and E2.

The map creator 55 is configured or programmed to create each of area maps (internal map and external map) based on the device positions DP detected by the second position detector 75 when the portable terminal 70 moves in each of the areas (internal area E1 and external area E2). Especially, when the portable terminal 70 moves across a plurality of areas, the map creator 55 is configured or programmed to create successive area maps based on the device positions DP so as to create the entire map.

In the present example embodiment, the map creator 55 is configured or programmed to, when the portable terminal 70 moves in an internal area E1, create an internal map based on the device positions DP detected by the second position detector 75. The map creator 55 is configured or programmed to create an external map based on the device positions DP detected by the second position detector 75 when the portable terminal 70 moves on an external area E2.

When the portable terminal 70 moves from a first area corresponding to an external map or an internal map to a second area which is adjacent to the first area and for which the map creator 55 has created no map, the map creator 55 is configured or programmed to create an area map corresponding to the second area by expanding, from an area map corresponding to the first area, the area map corresponding to the second area so as to create the entire map.

On the other hand, in a case where the portable terminal 70 moves from a first area corresponding to the external map or the internal map to a second area which is adjacent to the area E1 or E2 as the first area and for which the map creator 55 has created a corresponding area map, the map creator 55 is configured or programmed to combine the map corresponding to the first area and the corresponding map corresponding to the second area to create the entire map. Then, the map creator 55 may be configured or programmed to define a passage port between the first area and the second area.

Thus, the map creator 55 can increase a range of the areas E1 and/or E2 indicated in the entire map by expanding, from a first area E1 or E2 for which the corresponding map has already been created, an additional map corresponding to a second area E1 or E2 adjacent to the first area E1 or E2, and/or by combining a map corresponding to a first area E1 or E2 and another map corresponding to a second area E1 or E2 adjacent to the first area E1 or E2.

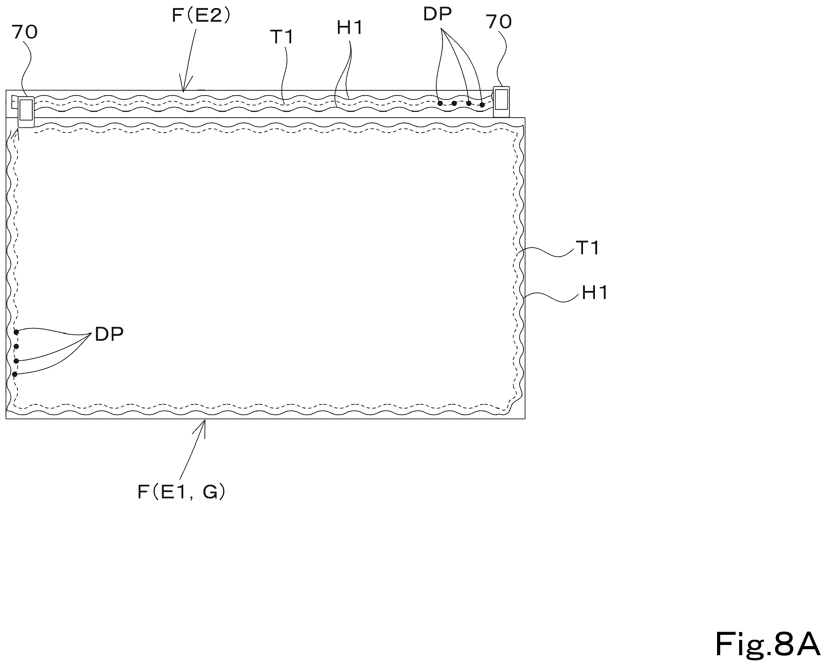

FIG. 8A illustrates an exemplary process of the first variation in which the portable terminal 70 is carried from an internal area E1 for which a new internal map has been created to an external area E2 for which no external map has been created. Specifically, FIG. 8A illustrates the portable terminal 70 which is being carried to enter the external area E2 (road area, farm road) which is adjacent to the internal area E1 after it has been carried in the internal area E1 (agricultural field G) so as to cause the map creator 55 to create an internal map corresponding to the internal area E1. Then, the portable terminal 70 is carried to move in the road area, and the map creator 55 creates an external map corresponding to the road area. Thus, in the exemplary process illustrated in FIG. 8A, the map creator 55 is configured or programmed to expand, from the map (internal map) indicating the agricultural field G, an additional map (road map) indicating the farm road which is adjacent to the agricultural field G so as to create an external map.

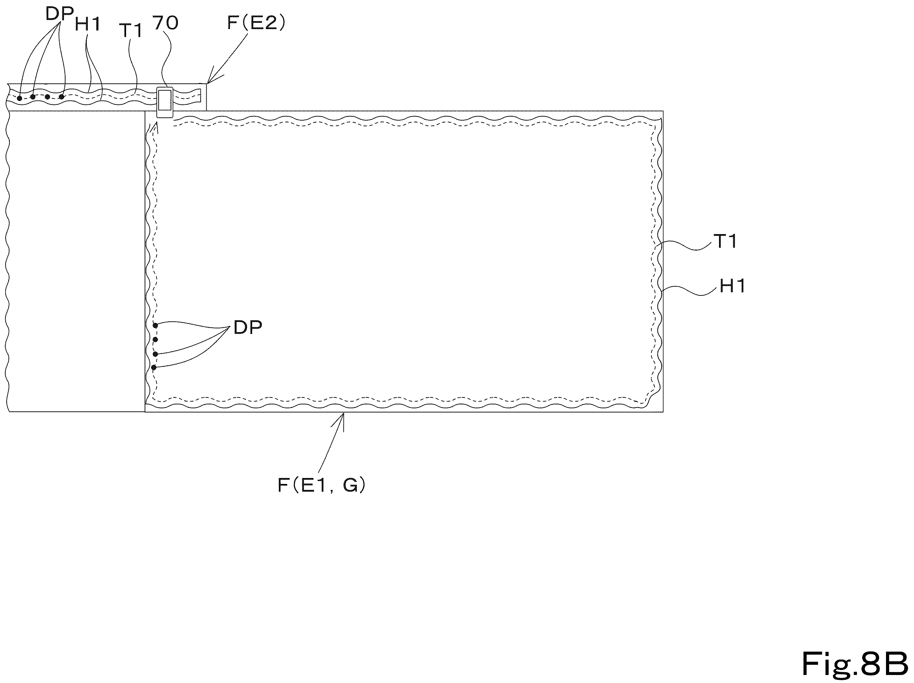

FIG. 8B illustrates another exemplary process of the first variation in which the portable terminal 70 is carried from an external area E2 for which a new external map has been created to an internal area E1 for which no internal map has been created. More specifically, FIG. 8B illustrates the portable terminal 70 which is being carried to enter the internal area E1 (agricultural field G) which is adjacent to the external area E2 after it has been carried in the external area E2 (road area, farm road) to cause the map creator 55 to create an external map corresponding to the external area E2. Then, the portable terminal 70 is carried to move in the internal area E1, and the map creator 55 creates an internal map corresponding to the internal area E1. Thus, in the exemplary process illustrated in FIG. 8B, the map creator 55 is configured or programmed to expand, from the map (external map) indicating the farm road, an additional map (internal map) indicating the agricultural field G which is adjacent to the farm road so as to create an external map.

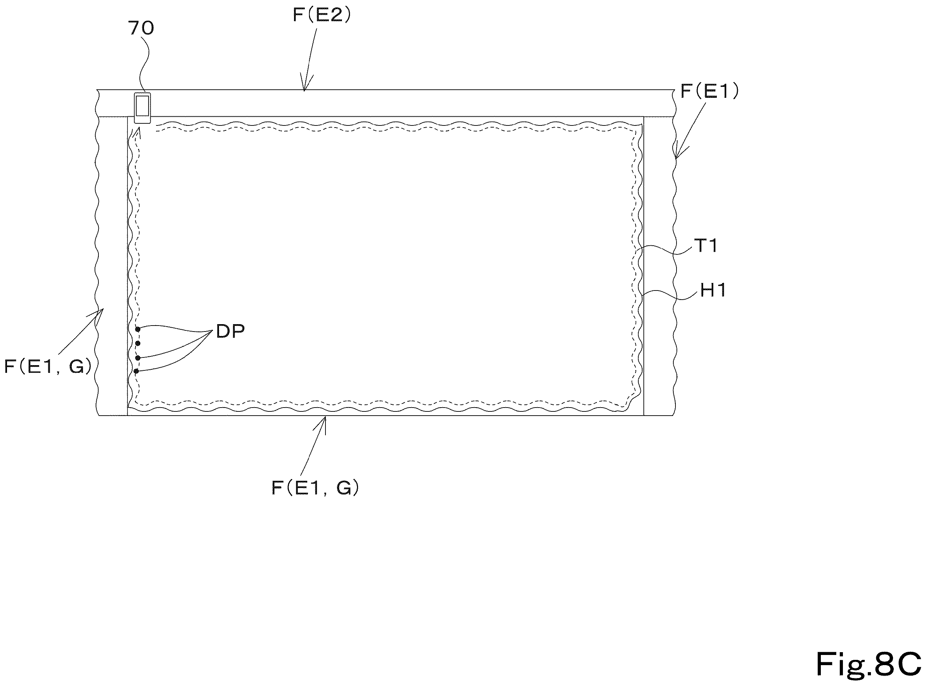

FIG. 8C illustrates another exemplary process of the first variation in which the portable terminal 70 is carried from an internal area E1 for which a new internal map has been created to an internal area E2 for which an external map has previously been created. Specifically, FIG. 8C illustrates the portable terminal 70 which is being carried to enter the external area E2 (road area, farm road) which is adjacent to the internal area E1 after it has been carried in the internal area E1 (agricultural field G) to cause the map creator 55 to create an internal map corresponding to the internal area E1. In this case, because there is the previously created external map corresponding to the external area E2 into which the portable terminal 70 is being carried to enter, the map creator 55 is configured or programmed to define the internal map and the external map as open to each other via a passageway therebetween instead of additionally creating an external map corresponding to the road area. That is, the map creator 55 is configured or programmed to combine the internal map and the external map. Thus, in the exemplary process illustrated in FIG. 8C, the map creator 55 is configured or programmed to combine the map indicating the agricultural field G (internal map) and the map indicating the farm road which is adjacent to the agricultural field G (road map).

More specifically, regarding the creation of an area map by the map creator 55 in the first variation, the map creator 55 is configured or programmed to, when the portable terminal 70 is carried in an area E1 or E2, acquire a plurality of detected locations that are the device positions DP detected by the second position detector 75. In other words, the map creator 55 is configured or programmed to acquire a track of the portable terminal 70 carried in the area E1 or E2. That is, the map creator 55 is configured or programmed to compute positional information about each of one or more areas E1 and/or one or more areas E2 based on the track of the portable terminal 70 having been carried in corresponding one of the one or more areas E1 and/or one or more areas E2, and create an area map based on the computed positional information. The map creator 55 is configured or programmed to compute, as each of one or more area maps and one or more external maps, positional information about each of the one or more areas E1 and/or one or more areas E2 including data of locations indicated by latitude and longitude and/or by coordinates (X axis and Y axis), and store the computed information in the second storage 53. Thus, the map creator 55 creates one or more internal maps and/or one or more external maps.

Because the only difference of the first variation from the previously mentioned example embodiment in which the agricultural machine 1 moves in the areas E1 and E2 is that the recorder 70 is carried in the areas E1 and E2 and that the map creator 55 is configured or programmed to create an area map based on device positions DP instead of vehicle-body positions VP, detailed explanation of the process to an area map and/or the like according to the first variation is omitted.

The map creator 55 may be configured or programmed to create an entire map based on the vehicle-body positions VP detected by the second position detector 75 when the agricultural machine 1 travels in the areas E1 and E2 and based on operation information and/or environmental information detected by the detector 31. The following describes a second variation in which the map creator 55 is configured or programmed to create an area map based on the vehicle-body positions VP and based on the operation information and/or the environmental information.

Specifically, the map creator 55 of the second variation is configured or programmed to, when the agricultural machine 1 travels in an area E1 or E2 or in the vicinity of the area E1 or E2, estimate a position of the area E1 or E2 based on the vehicle-body positions VP detected by the first position detector 31 and based on the operation information and/or the environmental information detected by the detector 31. Especially, when the agricultural machine 1 travels across a plurality of areas, the map creator 55 is configured or programmed to, based on the estimated positions of the respective areas E1 and E2, create successive area maps to create the entire map.

The map creator 55 is configured or programmed to, when being to create an internal map, estimate a position of the internal area E1 based on the vehicle-body position VP detected by the first position detector 30 and based on the operation information and/or the environmental information detected by the detector 31 at the vehicle-body positions VP as the agricultural machine 1 travels in the internal area E1 or in a vicinity of the internal area E1.

On the other hand, the map creator 55 is configured or programmed to, when the agricultural machine 1 travels in the external area E2 or in a vicinity of the external area E2, estimate a position of the external area E2 based on the vehicle-body position VP detected by the first position detector 30 and based on the operation information and/or the environmental information detected by the detector 31 at the vehicle-body positions VP. In the present example embodiment, the vicinity of each of the areas E1 and E2 is a periphery of each of the areas E1 and E2 and is located within a range which a plurality of sensing devices 31i can sense the corresponding area E1 or E2.

The map creator 55 is configured or programmed to acquire data created by the plurality of sensing devices 31i, perform a well-known image analysis process such as Simultaneous Localization and Mapping (SLAM) and a pattern matching process and/or the like, and estimate a position of a contour of the external area E2.

For example, in a case where the agricultural machine 1 is located on an outer periphery of the internal area E1, the map creator 55 is configured or programmed to detect a fence or a ridge which corresponds to a contour of the internal area E1, and estimate the contour of the internal area E1 from the vehicle-body positions VP, that is, a distance to the contour of the external area E2 based on the vehicle-body positions VP. In a case where the agricultural machine 1 is located on a public road, the map creator 55 is configured or programmed to estimate a road width of the public road based on instruction signs on the road such as centerlines and/or lane lines, ditches on both sides of the public road, and/or the like, and estimate a distance from the vehicle-body positions VP to the contour of the public road. The map creator 55 may be configured or programmed to estimate a distance from the vehicle-body position VP to the contour of the external area E2 based on respective colors of surfaces of the internal area E1 and the external area E2 and/or based on contour lines thereof.

The map creator 55 is configured or programmed to estimate positional information about a second line H1 defining a contour of the external area E2 based on the vehicle-body positions VP detected by the first position detector 30, and a distance from each of the vehicle-body positions VP to the contour of the external area E2 estimated at the corresponding vehicle-body position VP.

The map creator 55 need only be configured or programmed to estimate a position of the external area E2 based on the vehicle-body positions VP detected by the first position detector 30 and based on the operation information and/or the environmental information detected by the detector 31 at the respective vehicle-body positions VP, without limitation of estimation method to the above-mentioned method. For example, the map creator 55 may be configured or programmed to acquire, as the operation information detected by the detector 31, a vehicle speed detected by the speed sensor 31g, a roll angle, a pitch angle, a yaw angle, and/or the like of the traveling body 3 detected by the posture detection sensor 31h, and may be configured or programmed to estimate a position of the contour of the external area E2 by monitoring changes of a road surface state when moving from a first road area to a second road area or from the second road area to the first road area.

The map creator 55 may be configured or programmed to, when being to create an area map based on the estimated position of the area E1 or E2, cause the first display screen 51 to display a confirmation screen (not illustrated) to present the position of the estimated area E1 or E2 to the user, and receive confirmation of the position-estimated area E1 or E2. The map creator 55 is configured or programmed to, when receiving confirmation of the position-estimated area E1 or E2, associate positional information on the position-estimated area E1 or E2 as an area map with the identification information on the corresponding area Elor E2, cause the second storage 53 to store the associated information so as to create an area map. The map creator 55 is configured or programmed to, unless receiving confirmation of the position-estimated area E1 or E2 by the user via the confirmation screen, create no area maps based on the position-estimated area E1 or E2.

The map creator 55 may be configured or programmed to estimate an area category corresponding to an external area E2 based on vehicle-body positions VP detected by the first position detector 30 when the agricultural machine 1 travels in the external area E2 and based on operation information and/or environmental information detected by the detector 31 at the respective vehicle-body positions VP. In such a case, the map creator 55 is configured or programmed to, when the agricultural machine 1 travels in an external area E2 or in an vicinity of an external area E2, estimate an area category based on the vehicle-body positions VP detected by the first position detector 30 and based on the operation information and/or the environmental information detected by the detector 31 at the respective vehicle-body positions VP. The map creator 55 configured or programmed to estimate the area category may also be configured or programmed to estimate, based on the operation information and/or the environmental information, whether the area in which or in the vicinity of which the agricultural machine 1 is located is an internal area E1 or an external area E2 (these to be estimated are referred to as "area-category-plus " in the following).

Specifically, the map creator 55 is configured or programmed to acquire data created by the plurality of sensing devices 31i, perform an image analysis process such as known SLAM, a known pattern matching process and/or the like, and estimate area-category-plus. For example, the map creator 55 is configured or programmed to consult the data created by the plurality of sensing devices 31i, and estimate the area-category-plus based on crops around the agricultural machine 1, based on one or more instruction signs such as center lines or lane lines, based on colors of vegetation growing on a road or of a road surface, and/or based on one or more buildings and landscapes around the agricultural machine 1.

The map creator 55 is configured or programmed to determine an operation state of the agricultural machine 1 based on detection signals from the detector 31 such as the prime mover rotation sensor (rotation sensor) 31b, the angle sensor 31e, the speed sensor 31g, and/or the PTO rotation sensor (rotation sensor) 58, and execute estimation of the area-category-plus. For example, the map creator 55 is configured or programmed to, when the remaining amount detection sensor 31a detects an increase of a remaining amount of an energy source (fuel, electricity or the like to drive the prime mover 4), estimate that the agricultural machine 1 is located at a first supply area to be supplied with an energy source.

The map creator 55 to estimate area-category-plus need only being configured or programmed to estimate the area-category-plus based on the vehicle-body positions VP detected by the first position detector 30 and based on the operation information and/or the environmental information detected by the detector 31 at the respective vehicle-body positions VP, without limitation of how to eliminate the area-category-plus to the above-mentioned manner.

The map creator 55 is configured or programmed to associate the estimated area category-plus with the corresponding area E1 or E2, and associate the area-category-plus with the identification information of the corresponding area map.

The map creator 55 may be configured or programmed to, when being to associate the estimated area category with the area E1 or E2, cause the first display screen 51 to display a confirmation screen (not illustrated) to present, to the user, the area category estimated by the map creator 55, and receive a confirmation of the estimated area category. This map creator 55 is configured or programmed to, unless receiving confirmation of the area category estimated by the map creator 55 from the user via the confirmation screen, keep the area category as being not associated with the area E1 or E2 of the map. In such a case, the map creator 55 may be configured or programmed to display the first selection screen 110 on the first display screen 51, and receive designation of an area category based on information inputted via the first display screen 51, instead of confirmation of the estimated area category.

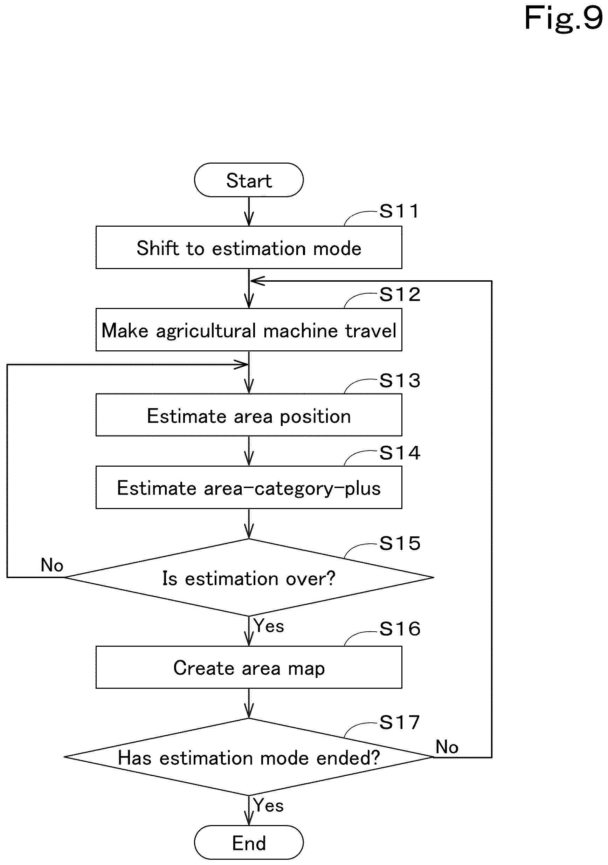

The following describes, using FIG. 9, a process flow to create an entire map (area map) by the map creator 55 in the second variation. FIG. 9 illustrates a flowchart of processes to create an entire map by the map creator 55 in the second variation. A series of processes illustrated in FIG. 9 is performed by a CPU based on software program(s) which are prestored in a memory of the second controller 52. First, when the user performs a predetermined operation on the display terminal 50, the map creator 55 shifts to a mode (estimation mode) in which the map creator 55 is allowed to create an area map by estimating a position of an area E1 or E2 in which the agricultural machine 1 travels and the area-category-plus related to the area E1 or E2 (S11). The user operates the agricultural machine 1, and causes the agricultural machine 1 to travel in an area E1 or E2 or in a vicinity of the area E1 or E2 (S12). The map creator 55 starts estimating a position of the area E1 or E2 based on the vehicle-body positions VP detected by the first position detector 30 and based on the operation information and/or the environmental information detected by the detector 31 at the vehicle-body positions VP (S13). The map creator 55 starts estimating area-category-plus related to the position-estimated area E1 or E2 based on the vehicle-body positions VP detected by the first position detector 30 and based on the operation information and/or the environmental information detected by the detector 31 at the respective vehicle-body positions VP (S14).

Upon ending the position-estimation of the area E1 or E2 and estimation of the area-category-plus related to the area E1 or E2 (S15: YES), the map creator 55 creates an area map (S16). Then, the map creator 55 associates the area map with the identification information about the area Elor E2 and stores the associated information in the second storage 53. The map creator 55, when being to create an external map, associates the estimated area category with the external map. During a period from the moment the user operates the display terminal 50 and until the user ends the estimation mode (S17: NO), the map creator 55 repeats the processes of steps S12 to S16.

In each of the previously mentioned example embodiments and first and second variations, the map creator 55 is configured or programmed to create the entire map using the agricultural machine 1 traveling in the corresponding area E1 or E2 or the recorder 70 carried in the corresponding area E1 or area E2. Alternatively, the map creator 55 may be configured or programmed to create an area map by receiving a designation of an arbitrary position and defining a position of the corresponding area E1 or E2 based on the arbitrary position. The following describes a third variation in which the map creator 55 creates an area map based on such an arbitrary position.

The map creator 55 of the third variation is configured or programmed to acquire geographic information stored in the third storage 62 of the external server 60. The geographic information may include positional information on one or more buildings and/or the like to be consulted when determining a position of an area E1 or E2. Preferably, the geographic information may be an entire map stored in the third storage 62. The map creator 55 is configured or programmed to receive designation of an arbitrary position (hereinafter referred to as "first designated position"). In the present example embodiment, the map creator 55 is configured or programmed to receive designation of a first designated position based on information inputted via the first display screen 51. The map creator 55 is configured or programmed to receive designation of the first designated position via data indicated by latitude and longitude, data indicated by coordinates (X axis and Y axis), and/or the like.

The map creator 55 is configured or programmed to compute positional information about the second line H1 based on the first designated position. The map creator 55 is configured or programmed to define areas (internal area E1 and external area E2) based on the second line H1, and create area maps (internal map and external map). The map creator 55 is configured or programmed to compute, as a map, positional information on an area E1 or E2 as a map including data indicating, by latitude and longitude and/or by coordinates (X axis and Y axis), the first designated position designation of which the map creator 55 has received, and store the computed map in the second storage 53. In this way, the map creator 55 is configured or programmed to create an area map. The first communicator 43 is configured to transmit the area map created by the map creator 55 to the third communicator 63, and the third controller 61 is configured or programmed to cause the third storage 62 to store the area map.

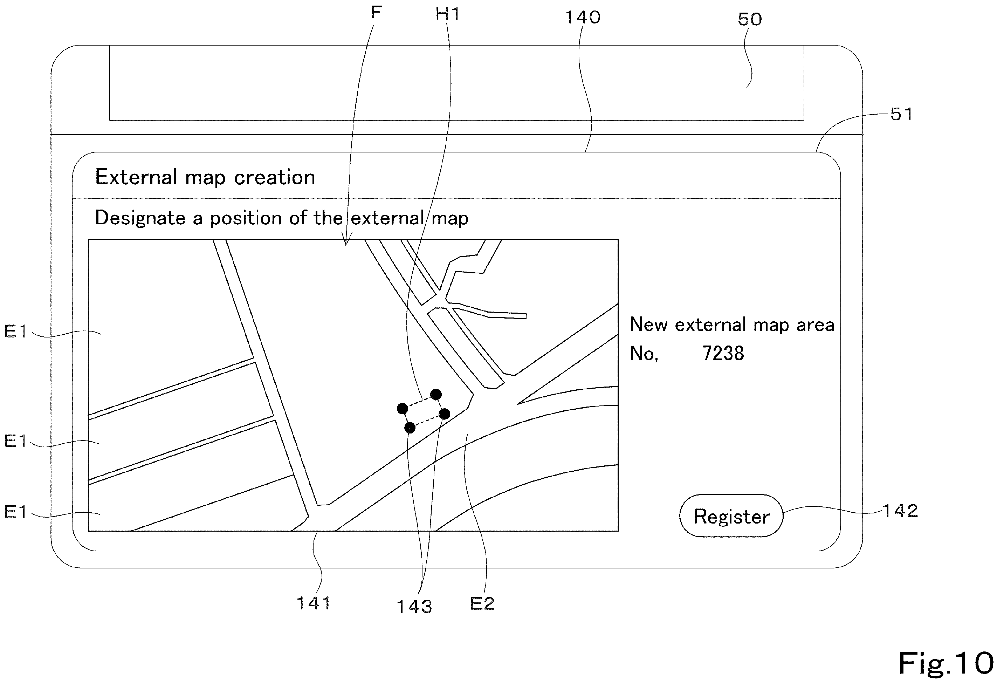

More specifically, in the third variation, the map creator 55 is configured or programmed to, when the confirmation button 113 is operated in a state where the first selection screen 110 is displayed on the first display screen 51, acquire identification information and the area-category-plus related to a corresponding one of area(s) E1 and/or area(s) E2, and, as illustrated in FIG. 10, cause the first display screen 51 to display a second creation screen 140.

FIG. 10 illustrates an example of the second selection screen 140 in the third variation. The second creation screen 140 displays a second field display portion 141 and a second registration button 142. The second field display portion 141 indicates information based on the geographic information and indicates an agricultural field F which includes one or more areas E1 and/or one or more areas E2. In this regard, the agricultural field F includes positional information such as longitudes, latitudes or coordinates (X axis and Y axis) previously associated therewith. Positional information on one or more buildings and/or the like is displayed on the agricultural field F. In the example illustrated in FIG. 10, positional information related to one or more internal areas E1 and an external area E2 (public road) is displayed on the second field display portion 141. In the present example embodiment, when an arbitrary point in the second field display portion 141 is tapped or selected by a cursor or the like, the map creator 55 is configured or programmed to receive designation of a first designated position on a contour of the corresponding area E1 or E2 defining a position of an end of the corresponding area E1 or E2. In the example illustrated in FIG. 10, a tapped point in the agricultural field F displayed in the second field display portion 142 is indicated as an icon 143 that defines the first designated position. The map creator 55 is configured or programmed to acquire positional information about the first designated position designation of which the map creator 55 has received, record the first designated position in the second storage 53 at an appropriate time, and cause the second field display portion 141 to display the icon 143 at an appropriate time.

The map creator 55 is configured or programmed to, when the second recording button 142 is operated, compute the positional information related to the second line H1 defining the contour of the corresponding area E1 or E2 based on a plurality of the recorded first designated positions. The map creator 55 is configured or programmed to set the second line H1 defined by the above-mentioned computation as the contour (outline) of the area E1 or E2, associate an area map including the positional information about the area E1 or E2 defined by the contour with the identification information about the corresponding area E1 or E2, and store the associated pieces of information in the second storage 53. In this way, the map creator 55 is configured or programmed to create an area map.

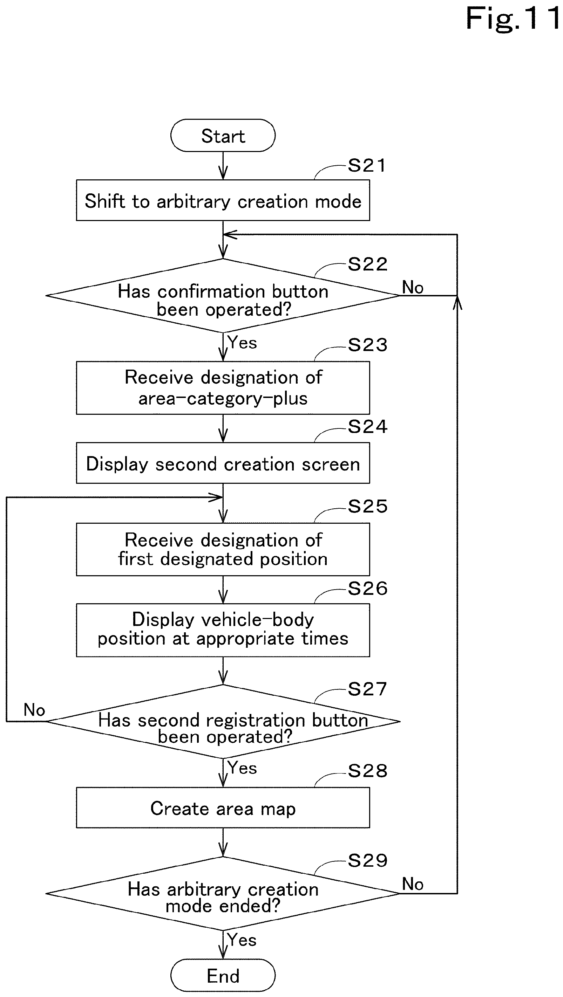

The following describes, using FIG. 11, a process flow to create an entire map (area map) by the map creator 55 in the third variation. FIG. 11 illustrates a flowchart to create an entire map by the map creator 55 in the third variation. A series of processes indicated in FIG. 11 are performed by a CPU based on software program(s) prestored in a memory of the second controller 52. First, when the user performs a predetermined operation on the display terminal 50, the map creator 55 shifts to a mode (arbitrary creation mode) to create an area map based on an arbitrary position (S21). More specifically, the map creator 55 causes the first display screen 51 to display the first selection screen 110. When the user performs input-operation via the first selection portion 111 and the second selection portion 112, and then performs confirmation-operation via the confirmation button 113 (S22: YES), the map creator 55 receives designation of an internal area E1 or external area E2 and designation of an area category via the first selection screen 110 (S23).

Then, the map creator 55 causes the first display screen 51 to display the second selection screen 140 (S24). The user designates a first designated position by tapping or selecting an arbitrary point in the second field display portion 141, and the map creator 55 receives a designation of the first designated position (S25).

The map creator 55 acquires positional information on the first designated position the designation of which the map creator 55 has received, record the first designated position in the second storage 53 at an appropriate time and cause the second field display portion 141 to display the icon 143 at an appropriate time (S26).

When the user ends the designation of the first designated position and performs a button-operation on the second recording button 142 (S27: YES), the map creator 55 computes the positional information on the second line H1 defining the contour of the corresponding area E1 or E2 based on the plurality of recorded first designated positions, and creates an area map (S28). Then, the map creator 55 associates the area map with identification information of the corresponding area E1 or E2, and stores the associated information in the second storage 53. When the map creator 55 has created an external map, then, the map creator 55 associates one area category selected via the second selection portion 112 with the area map. During a period from the moment the user operates the display terminal 50 and until the user ends the arbitrary creation mode (S29: NO), the map creator 55 repeats the processes of steps S22 to S28.

Nevertheless, this is a mere exemplary manner to create an entire map using the map creator 55. Alternatively, for example, the map creator 55 may be configured or programmed to create an internal map according to the manner of the third variation, and create an external map according to the manner of the second variation. Alternatively, the map creator 55 may be configured or programmed to create an entire map by suitably combining the above-mentioned manners.

As illustrated in FIG. 1, the assistance system S for the agricultural machine 1 includes an assistance device 80. The assistance device 80 is configured to assist the agricultural machine 1 based on the vehicle-body positions VP detected by the first position detector 30 and based on the external map (the entire map in the present example embodiment) created by the map creator 55.

For example, the assistance device 80 includes an automatic operation controller 40a configured or programmed to perform automatic operation of the agricultural machine 1. Hereinafter, description will be given on an assumption that, in a case where the automatic operation controller 40a performs a control of the automatic operation of the agricultural machine 1, the agricultural machine 1 is in an "automatic operation mode".

The automatic operation controller 40a is configured or programmed to perform automatic operation of the agricultural machine 1. In the present example embodiment, the automatic operation controller 40a is included in a first controller 40 which includes an electric/electronic circuit(s), and programs and/or the like stored in a CPU(s) and/or the like. The automatic operation controller 40a is configured or programmed to perform a line automatic operation control and/or an autonomous automatic operation control. The automatic operation controller 40a is configured or programmed to, when performing the line automatic operation control, control operations of the steering system 11, the transmission 20, the prime mover 4 and/or the like so that the agricultural machine 1 (traveling body 3) moves along a predefined planned traveling line.

The automatic operation controller 40a is configured or programmed to, when performing the autonomous automatic operation control, calculate a steering direction, a traveling speed (speed) and/or the like of the traveling body 3 based on results of sensing (detection of objects) of environments around the agricultural machine 1 (traveling body 3) by the sensing device 31i and/or the like and control operations of the steering system 11, the transmission 20, the prime mover 4 and/or the like so as to realize the calculated steering and traveling speed.

A switch or the like may be provided to select either the line automatic operation control or the autonomous automatic operation control. The automatic operation controller 40a may be configured or programmed to perform only one of the line automatic operation control and the autonomous automatic operation control. A configuration of the automatic operation controller 40a is not limited to the above-mentioned configuration.

The automatic operation controller 40a is configured or programmed to, when the agricultural machine 1 is in the automatic operation mode, perform automatic operation of the agricultural machine 1 based on the vehicle-body position VP detected by the first position detector 30 and based on the entire map created by the map creator 55. For example, when the line automatic operation control is performed, a planned traveling line is predefined on the entire map, and the automatic operation controller 40a is configured or programmed to control operations of the steering system 11, the transmission 20, the prime mover 4 and/or the like so that the agricultural machine 1 (traveling body 3) moves along the predefined planned traveling line based on the vehicle-body position VP detected by the first position detector 30 and based on the planned traveling line on the entire map.

The automatic operation controller 40a is configured or programmed to, when performing the autonomous automatic operation control, calculate the steering direction, the traveling speed (speed) and/or the like of the traveling body 3 based on the vehicle-body positions VP detected by the first position detector 30 and based on a contour included in the entire map as well as based on the results of sensing (detection of objects) of the environment around the agricultural machine 1 (traveling body 3) by the sensing device 31i and/or the like. Then, the automatic operation controller 40a is configured or programmed to control operations of the steering system 11, the transmission 20, the prime mover 4 and/or the like so that the agricultural machine 1 travels to realize the calculated steering and traveling speed and so that the agricultural machine 1 travels in an internal area E1 and/or in an external area E2.

The assistance device 80 may include a management terminal 81 in addition to the automatic operation controller 40a. The management terminal 81 is configured or programmed to, when the agricultural machine 1 is in the automatic operation mode, inform a manager supervising the agricultural machine 1 and/or the user regarding statuses of the agricultural machine 1. The management terminal 81 is a smartphone (multifunction mobile phone), a tablet, a portable terminal 70 such as a PDA, a fixed computer such as a personal computer, or the like.

As illustrated in FIG. 1, the management terminal 81 includes a third display screen 82, a fifth controller 83, a fifth storage 84 and a fifth communicator 85. The third display screen 82 is rectangular, includes a panel such as an LCD display or an OLED display, and is transitable among various screens via control by the fifth controller 83.

The fifth controller 83 is configured or programmed to perform various controls of the management terminal 81, and includes a CPU(s), an electric/electronic circuit(s) and/or the like. The fifth controller 83 is configured or programmed to cause the third display screen 82 to display information related to the agricultural machine 1. More specifically, the fifth controller 83 is configured or programmed to cause the third display screen 82 to display information stored in the fifth storage 84, information received from one or more external devices via the fifth communicator 85, and or the like.

The fifth storage 84 includes a nonvolatile memory and/or the like, and is configured to store various programs, various pieces of information related to the management terminal 81 and/or the like. For example, the fifth storage 84 prestores various control programs and data.

The fifth communicator 85 performs indirect wireless communication with the second communicator 54. For example, the fifth communicator 85 receives various data including corresponding data, which associates vehicle-body positions VP detected by the first position detector 30 with captured images detected by the sensing device 31i, the entire map and/or the like. In the present example embodiment, the fifth communicator 85 performs wireless communication with one or more external devices (server 60 and/or the like). As another example, the fifth communicator 85 may perform direct or indirect communication with the first communicator 43, the third communicator 63 and or the like via a communication standard IEEE802. 11 Wireless Fidelity (Wi-Fi, registered trademark), BLE, LPWA, LPWAN, and/or the like.

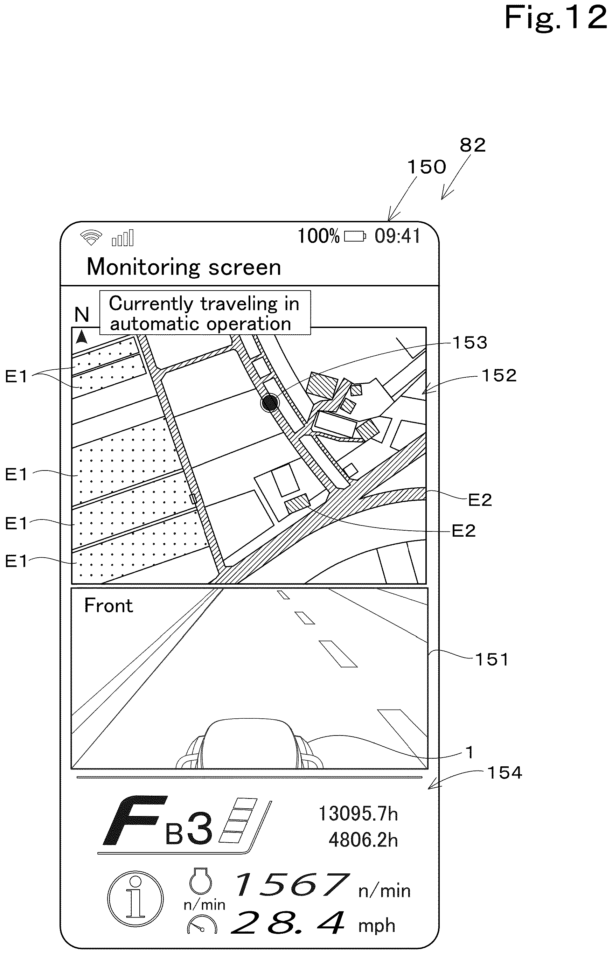

The management terminal 81 is configured or programmed to, when the agricultural machine 1 is in the automatic operation mode, display statuses of the agricultural machine 1. For example, the management terminal 81 is configured or programmed to display a monitoring screen 150 as illustrated in FIG. 12. FIG. 12 illustrates an example of the monitoring screen 150. The monitoring screen 150 includes a first environments display portion 151 indicating environments around the agricultural machine 1, and a first map display portion 152. When the agricultural machine 1travels forward, captured images showing a front view of the agricultural machine 1 are displayed on the first environments display portion 151 and, when the agricultural machine 1 travels rearward, captured images showing a rear view of the agricultural machine 1 are displayed on the first environments display portion 151.

As illustrated in FIG. 12, the first map display portion 152 displays an external map based on the vehicle-body positions VP detected by the first position detector 30 and based on the entire map generated by the map creator 55, and displays an icon 153 indicating a position of the agricultural machine 1 on the external map.

A first information display portion 154 indicating operation information on operation of the agricultural machine 1 may be displayed on the monitoring screen 150. The fifth controller 83 is configured or programmed to acquire, via the fifth communicator 85 and the first communicator 43, the operational information on the agricultural machine 1 detected by the detector 31, and display the operation information acquired via the first information display portion 154.

The assistance system S for the agricultural machine 1 includes a remote operation device 90. The assistance device 80 may include a remote controller 40b to perform remote operation of the agricultural machine 1 according to an operation of the remote operation device 90 and a display 95 to display one or more pieces of information related to a remote operation. Hereinafter description about the remote controller 40b performing a remote operation control based on a remote operation via the remote-operation device 90 will be given on an assumption that the agricultural machine 1 is in a "remote operation mode".

The remote operation device 90 is provided at a distance from the agricultural machine 1. With the remote operation device 90, it is possible to remotely control the agricultural machine 1 by a remote user (operator), and it is possible to monitor a state of the agricultural machine 1 and environments around the agricultural machine 1. The remote operation device 90 includes a sixth controller 91, a sixth storage 92, a second operation device 93, and a sixth communicator 94.

The sixth controller 91 is configured or programmed to perform various controls of the remote operation device 90, and includes a CPU(s), an electric/electronic circuit(s) and/or the like.

The sixth storage 92 includes a nonvolatile memory and/or the like, and is configured to store various programs and/or various pieces of information about the remote operation device 90 such as related to various programs and/or the like. For example, the sixth storage 92 stores various prestored operation control programs and data to remotely operate the agricultural machine 1.

The second operation device 93 is operable to remotely control the agricultural machine 1. The second operation device 93 is provided in the vicinity of a remote operation seat. A remote user sitting on the remote operation seat (not illustrated) operates the second operation device 93 to remotely control a traveling of the agricultural machine 1 or a work by the working device 2.

The second operation device 93 includes a steering member (steering wheel), an acceleration member (accelerator pedal, accelerator lever), a braking member (braking pedal), a clutch pedal, a speed-control member (speed-control lever, speed-control switch) and/or the like. The operation members included in the second operation device 93 are not limited to the above-mentioned members. For example, the second operation device 93 may include one or more touchpads or hardware switches and/or the like.

The sixth communicator 94 performs direct or indirect communication with the first communicator 43 via a communication standard IEEE802. 11 Wireless Fidelity (Wi-Fi, registered trademark), BLE, LPWA, LPWAN, and/or the like. As another example, the sixth communicator 94 may include a communication circuit capable of wirelessly communicating with one or more external devices (server 60 and/or the like) outside thereof via, for example, a mobile phone communication network, a data communication network or the like.

The sixth communicator 94 transmits, to the first communicator 43, an operation signal about the second operation device 93. For example, when an acceleration member of the second operation device 93 is operated, the sixth communicator 94 is configured to transmit, to the first communicator 43, an operation signal about the operated acceleration member.

The remote controller 40b is configured or programmed to remotely control operation of the agricultural machine 1. The remote controller 40b is included in the first controller 40 and includes electric/electronic component(s) and program(s) and/or the like stored in a CPU(s) and/or the like. The remote controller 40b is configured or programmed to control operations of the steering system 11, the transmission 20 and the prime mover 4 and/or the like based on an operation signal about the second operation device 93 received from the remote-control device 90 so that the agricultural machine 1 (traveling body 3) moves. For example, when the agricultural machine 1 is in the remote-operation mode, the first communicator 43 is configured or programmed to receive an operation signal about the acceleration member from the sixth communicator 94, and the remote controller 40b is configured or programmed to control a rotational frequency of the prime mover 4 based on the received operation signal.

As described above, the user can remotely control the agricultural machine 1 via the remote controller 40b by operating the second operation device 93 of the remote-control device 90.

The sixth communicator 94 may receive various data (detection information from the detector 31 and/or the like) sent from the first communicator 43. For example, the sixth communicator 94 transmits, from the first communicator 43, corresponding data which associate the vehicle-body positions VP detected by the first position detector 30 and captured images detected by the sensing device 31i, and various data of the entire map and/or the like. The various data received by the sixth communicator 94 is transmitted to the display 95.

The display 95 is configured to display information related to the agricultural machine 1. The display 95 includes a fourth display screen 96, a seventh controller 97, a seventh storage 98, and a seventh communicator 99. In the present example embodiment, the fourth display screen 96 of the display 95 is a monitor located in the vicinity of the remote-control device 90. More specifically, the fourth display screen 96 is provided at a position (for example, forward, diagonally forward, or sideward of a remote-operation seat) where it is visible by the user sitting on the remote-operation seat of the remote-control device 90. The fourth display screen 96 is rectangular, includes a panel(s) such as a LCD or an OLED display, and is transitable among various screens via control of the seventh controller 97.

The seventh controller 97 is configured or programmed to perform various controls of the display 95, and includes a CPU(s), an electric/electronic circuit(s) and/or the like. The seventh controller 97 causes the fourth display screen 96 to display the information related to the agricultural machine 1. More specifically, the sixth controller 91 causes the fourth display screen 96 to display information stored in the seventh storage 98, information received from one or more external devices via the seventh communicator 99, and/or the like.

The seventh storage 98 includes a nonvolatile memory and/or the like, and is configured to store various pieces of information about the display 95 such as various programs and/or the like. For example, the seventh storage 98 prestores various control programs and data.

The seventh communicator 99 is configured to communicate via wire with the sixth communicator 94. For example, the seventh communicator 99 transmits, via the sixth communicator 94, various data including corresponding data which associate vehicle-body positions VP detected by the first position detector 30 with captured images detected by the sensing device 31i, and the entire map and/or the like. In the present example embodiment, the seventh communicator 99 performs indirect wireless communication via the sixth communicator 94 with one or more external devices (server 60 and/or the like). As another example, the seventh communicator 87 may perform direct or indirect communication with the first communicator 43, the third communicator 63 and or the like via a communication standard IEEE802. 11 Wireless Fidelity (Wi-Fi, registered trademark), BLE, LPWA, LPWAN, and/or the like.

In the above-mentioned example embodiment, a monitor provided in the vicinity of the remote-operation device 90 is used as an example of the display 95. However, the display 95 need only be able to communicate with the first communicator 43 and to display various data received from the first communicator 43. The display 95 may be a fixed computer or the like, or the portable terminal 70 held by the user who monitors an automatic operation of the agricultural machine 1.

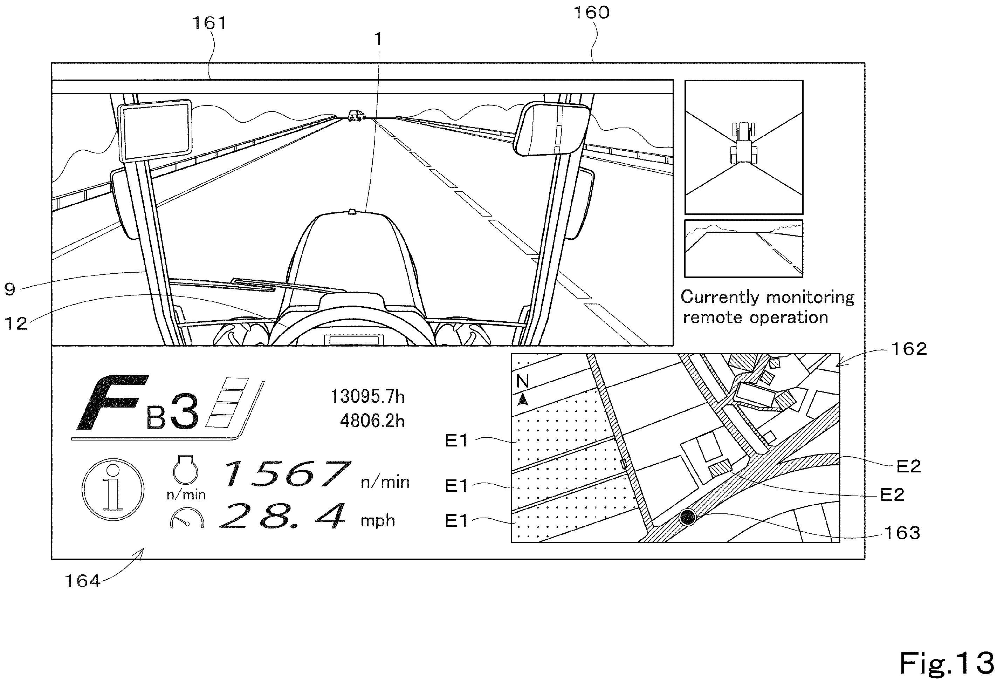

For example, the display 95 is configured to display information for remote operation of the agricultural machine 1. In other words, when the agricultural machine 1 is in the remote operation mode, the display 95 displays statuses of the agricultural machine 1. For example, as illustrated in FIG. 13, the display 95 displays a remote operation screen 160. FIG. 13 illustrates an example of the remote operation screen 160. The remote operation screen 160 includes a second environment display portion 161 to indicate environments around the agricultural machine 1, and a second map display portion 162. When the agricultural machine 1 moves forward, captured images showing a front view of the agricultural machine 1 are displayed on the second periphery display portion 161, and, when the agricultural machine 1 moves rearward, captured images showing a rear view of the agricultural machine 1 are displayed on the second periphery display portion 161. The second environment display portion 161 may combine images of the environments around the agricultural machine 1 captured by the imaging device 31i1, and may display a virtual bird's eye view from the agricultural machine 1.

As illustrated in FIG. 13, the second map display portion 162 displays the entire map and an icon 163 indicating a position of the agricultural machine 1 on the entire map based on the vehicle-body position VP detected by the first position detector 30 and based on the entire map created by the map creator 55.

The remote operation screen 160 may include a second information display portion 164 to indicate operation information on an operation of the agricultural machine 1. The seventh controller 97 is configured or programmed to acquire, via the seventh communicator 99 and the first communicator 43, the operation information on the agricultural machine 1 detected by the detector 31, and display the operation information acquired via the second information display portion 164.

As described above, even when located outside of the agricultural field G, the agricultural machine 1 can perform an action corresponding to the position thereof.

The assistance device 80 need only be configured to assist the agricultural machine 1 based on the vehicle-body position VP detected by the first position detector 30 and based on the entire map created by the map creator 55, and is not limited to the automatic operation controller 40a, the display 95, the remote controller 40b, and/or the like.

For example, the agricultural machine 1 may be configured to perform a plurality of functions, and the assistance device 80 may be configured or programmed to respectively enable or disable the plurality of functions based on an area category corresponding to the external area E2 where the agricultural machine 1 is located. As illustrated by FIG. 1, the assistance device 80 includes a function definer 40c. The function definer 40c is configured or programmed to define whether each of the functions is enabled or disabled based on the vehicle-body positions VP detected by the first position detector 30 and based on the area category corresponding to the external area E2 which each of the detected vehicle-body positions VP belongs to. The function definer 40c is included in the first controller 40 which includes electric/electronic component(s) and program(s) and/or the like stored in a CPU(s) and/or the like. The function definer 40c is configured or programmed to acquire a current vehicle-body position VP from the first position detector 30 and acquire, via the first communicator 43 and the second communicator 54, an entire map including an external map. The function definer 40c is configured or programmed to determine a category corresponding to the external area E2 where the agricultural machine 1 is located based on the acquired current vehicle-body position VP and based on the entire map.

The function definer 40c is configured or programmed to, when determining the area category corresponding to the external area E2 where the agricultural machine 1 is located, acquire one or more of function tables from the first storage 41. The function tables are each defined for each of area categories, and are stored in the first storage 41. Each function table associates the corresponding area category with enablement or disablement of each of the functions. The function definer 40c is configured or programmed to, when determining that the agricultural machine 1 is located in mutually overlapping external areas E2, and that the mutually overlapping external areas E2 where the agricultural machine 1 is located belong to two or more area categories, acquire function tables corresponding to the two or more area categories from the first storage 41.

The function definer 40c is configured or programmed to, when acquiring one or more of the function tables, define whether each of the functions is enabled or disabled based on the acquired one or more function tables. The function definer 40c is configured or programmed to, when acquiring two or more function tables for the agricultural machine 1 located in two or more overlapping external areas E2, determine whether each of the functions is enabled or disabled based on the plurality of function tables while giving priority to enablement over disablement. More specifically, the function definer 40c is configured or programmed to, when one function is disabled in one of the acquired function tables and the one function is enabled in another of the acquired function tables, give priority to the enablement over the disablement and define the one function as enabled.

The following describes an example of the agricultural machine 1 including a plurality of functions. The agricultural machine 1 of the present example embodiment includes the following first to twelfth functions. The following functions (first to twelfth functions) are only examples. Note that this does not imply a limitation for the categories of the functions, that one or more of the functions may be used as functions of the agricultural machine 1, and that other function(s) may be added or one or more of the functions may be modified.

The first function is a function to select which part (the main transmission 20b, and/or the secondary transmission 20c) of the transmission 20 is used to change a speed stage of the transmission 20. The first controller 40 is configured or programmed to, when the first function is enabled, select an on-road mode in which control of one or more shifters of the main transmission 20b and control of one or more shifters of the secondary transmission 20c are allowed. The first controller 40 is configured or programmed to, when the first function is disabled, select an off-road mode in which the control of the one or more shifters of the main transmission 20b is allowed and the control of the one or more shifters of the secondary transmission 20c is restricted. That is, the first controller 40 is configured or programmed to, when in the on-road mode, control the one or more shifters of the main transmission 20b and the one or more shifters of the secondary transmission 20c based on an operation signal or operation signals from the first operation device 42 or the second operation device 93 and/or the like. On the other hand, the first controller 40, when in the off-road mode, control the one or more shifters of the main transmission 20b based on a corresponding operation signal from the first operation device 42 or the second operation device 93 and/or the like. In this regard, the first controller 40 is configured or programmed, when in the off-road mode, control the one or more shifters of the secondary transmission 20c to maintain a low-speed gear position of the secondary transmission 20c.

The second function is a function to allow realizing a speed-equalized 4WD mode by controlling the front transmission 20f. The first controller 40 is configured or programmed to, when the second function is enabled, disengage the first clutch 20f1 and engage the second clutch 20f2 (to realize the speed-equalized 4WD mode) based on a corresponding operation signal from the first operation device 42 or the second operation device 93 and/or the like. On the other hand, the first controller 40 is configured or programmed to, when the second function is disabled, not allow realizing the speed-equalized 4WD mode based on the corresponding operation signal from the first operation device 42 or the second operation device 93 and/or the like.

The third function is a function to allow realizing a speed-increased 4WD mode by controlling the front transmission 20f. The first controller 40 is configured or programmed, when the third function is enabled, engage the first clutch 20f1 and disengage the second clutch 20f2 (to realize the speed-increased 4WD mode) based on a corresponding operation signal from the first operation device 42 or the second operation device 93 and/or the like. On the other hand, the first controller 40 is configured or programmed to, when the second function is disabled, not allow realizing the speed-increased 4WD mode based on the corresponding operation signal from the first operation device 42 or the second operation device 93 and/or the like.

The fourth function is a function to allow the working device 2 connected to the linkage 8 to move up and down. The first controller 4 is configured or programmed to, when the fourth function is enabled, control a control valve to extend or contract the lift cylinders 8e to move the working device 2 upward or downward based on a corresponding operation signal from the first operation device 42 or the second operation device 93 and/or the like. The first controller 40 may be configured or programmed to, even when the fourth function is enabled, compute a height of the working device 2 based on a detection signal from the angle sensor 31e, and limit the height of the working device 2 so that the height of the working device 2 does not exceed an upper limit. The upper limit is defined as a value such as to prevent the working device 2 from abutting against the agricultural machine 1. The upper limit may be a value stored in the first storage 41, or may be a value defined based on a detection signal from the detector 31 such as the sensing device 31i.

On the other hand, the first controller 40 is configured or programmed to, when the fourth function is disabled, not allow the moving up or down of the working device 2 based on the corresponding operation signal from the first operation device 42or the second operation device 93 and/or the like, but cause the lift cylinders 8e to extend or contract, compute the height of the working device 2 based on the detection signal from the angle sensor 31e, and cause the working device 2 to move up to increase the detected height to the upper limit.

The fifth function is a function to limit the height of the working device 2 to prevent it from becoming lower than a first lower limit in a case where the fourth function is enabled. That is, the first controller 40 is configured or programmed to, when the fourth function and the fifth function are enabled, compute the height of the working device 2 based on the detection signal from the angle sensor 31e, and limit the height of the working device 2 so that the detected height thereof is not lower than the first lower limit. The first lower limit is a height at which the working device 2 is not in contact with the ground. The first lower limit may be a value stored in the first storage 41, or may be a value defined based on a detection signal from the detector 31 such as one or more of the sensing devices 31i.

The first controller 40 is configured or programmed to, when the fourth function is enabled and the fifth function is disabled, compute the height of the working device 2 based on the detection signal from the angle sensor 31e, and limit the height of the working device 2 to keep the detected height thereof from becoming lower than a second lower limit. The second lower limit is an arbitrary height of the working device 2. The second lower limit may be a height where the working device 2 is in contact with the ground, or may be a height where the working device 2 is not in contact with the ground. The second lower limit may be a value stored in the first storage 41, or may be a value determined based on a detection signal from the detector 31 such as one or more of the sensing devices 31i.

The sixth function is a function to allow power transmission to the PTO shaft 22 by controlling the PTO power transmission 20e. The first controller 40 is configured or programmed to, when the sixth function is enabled, control the PTO power transmission 20e to selectively allow or interrupt the power transmission to the PTO shaft 22 based on a corresponding operation signal from the first operation device 42 or the second operation device 93 and/or the like. On the other hand, the first controller 40 is configured or programmed to, when the sixth function is disabled, switch a hydraulic clutch of the PTO power transmission 20e to a position to prevent the power of the propeller shaft 20a from being transmitted to the PTO shaft 22.

The seventh function is a function to allow power transmission to the PTO shaft 22 by controlling the PTO power transmission 20e in a case where the sixth function is disabled and the power shuttle 20d interrupts power transmission therethrough. The first controller 40 is configured or programmed to, when the sixth function is disabled, the seventh function is enabled, and the hydraulic clutch of the power shuttle 20d is in a neutral position such that the power shuttle 20d interrupts the power transmission therethrough, switch the hydraulic clutch of the PTO power transmission unit 20e to the position to prevent the power of the propeller shaft 20a from being transmitted to the PTO shaft 22.

The eighth function is a function to cause the agricultural machine 1 to perform a predetermined series of actions according to operations performed by the user. Information about contents, sequence and/or the like of the series of actions is stored in the first storage 41. For example, the series of actions stored in the first storage 41 includes an action (exiting action) to be performed by the agricultural machine 1 when moving from a work area inside of a headland area to the headland area, and an action (entrance action) to be performed by the agricultural machine 1 when moving from the headland area to the work area.

The first controller 40 is configured or programmed to, when the eighth function for the exiting action is enabled, read the exiting action from the first storage 41 and perform the exiting action based on a corresponding operation signal from the first operation device 42 or the second operation device 93 and/or the like. To cause the first agricultural machine 1 to perform the exiting action, the first controller 40 is configured or programmed to control a corresponding control valve to cause the working device 2 to move up, switch the hydraulic clutch of the PTO power transmission 20e to a position to prevent the power of the propeller shaft 20a from being transmitted to the PTO shaft 22. Additionally, the first controller 40 is configured or programmed to switch the rear wheel differential device 21R to a non-diff-lock position to unlock a diff-locker thereof, and switch the front transmission 20f to a 2WD mode position.

The first controller 40 is configured or programmed to, when the eighth function for the entrance action is enabled, read required processes for the entrance action from the first storage 41 and cause the agricultural machine 1 to perform the entrance action based on a corresponding operation signal and/or the like from the first operation device 42 or of the second operation device 93. To cause the agricultural machine 1 to perform the entrance action, the first controller 40 is configured or programmed to switch the front transmission 20f to a speed-equalized 4WD mode position, and switch the rear wheel differential device 21R to a diff-lock position to lock the diff-locker thereof. Additionally, the first controller 40 is configured or programmed to control a corresponding control valve to cause the working device 2 to move down, and switch the hydraulic clutch of the PTO power transmission 20e to a PTO-ON position to transmit the power of the propeller shaft 20a to the PTO shaft 22.

The first controller 40 is configured or programmed to, when the eighth function is disabled, keep the agricultural machine 1 from performing the exiting action or the entrance action based on the corresponding operation signal from the first operation device 42 or the second operation device 93 and/or the like.

The ninth function is a function to allow the working device 2 to control the agricultural machine 1 via the first controller 40 in a case where the working device 2 is communicably connected to the first controller 40. The first controller 40 is configured or programmed to, when the ninth function is enabled, control various pieces of equipment included in the agricultural machine 1 based on instruction from a work controller 2a which is provided on or in the working device 2 and includes electric/electronic circuit(s) and/or program(s) stored in a CPU(s) and/or the like. On the other hand, the first controller 40 is configured or programmed to, when the ninth function is disabled, not allow the working controller 2a to control the agricultural machine 1.

The tenth function is a function to switch the hydraulic clutch of the power shuttle 20d to a neutral position to interrupt transmission of power to the traveling device 7 in a case where the braking member is operated and the vehicle speed is lower than a predetermined speed. The first controller 40 is configured or programmed to, when the tenth function is enabled, determine whether or not the braking member is operated and the vehicle speed becomes lower than the predetermined speed based on the operation of the braking member detected by the braking sensor 31d and based on the vehicle speed detected by the speed sensor 31g, and then execute the tenth function.

The eleventh function is a function to control a rotational frequency of the prime mover 4 to be equal to or lower than a predetermined limit rotational frequency. The limit rotational frequency is a rotational frequency of the prime mover 4 prestored in the first storage 41, and is a rotational frequency such that a noise generated by the prime mover 4 when rotating at this rotational frequency is relatively reduced. The limit rotational frequency may be optionally changed to an appropriate value by operating on the display terminal 50 or the like. Alternatively or additionally, the detector 31 may include a microphone to detect a noise generated by the prime mover 4, and may be configured to compute the limit rotational frequency according to the noise detected by the microphone. The first controller 40 is configured or programmed to, when the eleventh function is enabled, acquire a rotational frequency of the prime mover 4 detected by the prime mover rotation sensor 31b and control a rotational frequency of the prime mover 4 so that the rotational frequency is equal to or lower than the limited rotational frequency. The first controller 40 is configured or programmed to, when the eleventh function is disabled, not perform the limitation of the rotational frequency of the prime mover 4 based on the limit rotational frequency.

The twelfth function is a function to control a vehicle speed of the traveling body 3 so as not to be lower than a predetermined first limit vehicle speed, and not to be higher than a second limit vehicle speed. The first limit vehicle speed and the second limit vehicle speed are predetermined vehicle speeds prestored in the first storage 41, or vehicle speeds of the traveling body 3 calculated via a predetermined computing equation prestored in the first storage 41. In a case where, for example, the agricultural machine 1 with a trailer attached thereto travels downhill, the first limit vehicle speed is defined as a speed greater than a speed of the trailer assumed as being traveling downhill only by its own weight. In a case where, for example, the agricultural machine 1 with a trailer attached thereto travels downhill, the second limit vehicle speed is defined so that the trailer can travel steadily. More specifically, the second limit vehicle speed is defined as a speed which can lead steady control of the trailer while the agricultural machine 1 is steered, accelerated or decelerated. The first controller 40 is configured or programmed to, when the twelfth function is enabled, acquire a rotational frequency of the prime mover 4 detected by the prime mover rotation sensor 31b, control the transmission 20 and the prime mover 4 to control a vehicle speed of the traveling body 3 so as not to be lower than the first limited vehicle speed and not to be higher than the second limited vehicle speed. The first controller 40 is configured or programmed to, when the twelfth function is disabled, be kept from controlling the vehicle speed based on the first limit vehicle speed and the second limit vehicle speed.

The following describes a relationship between each of exemplary area categories for external areas E2 and enablement/ disablement of the respective functions. In the present example embodiment, the area categories for external areas E2 include a first road area, a second road area, a storage area, a waiting area, a rest area, a vehicle-wash area, a first supply area, a second supply area, a crop-discharge area, a maintenance area, a mud removing area, a noise warning area, and a slope area.

As previously described, the first road area defines a farm road along a periphery of the agricultural field G, and corresponds to an external area E2 used mainly for movement of the agricultural machine 1 therealong. In the function table for the first road area, the first function to the fourth functions and the sixth function are enabled, and the fifth function and the seventh to the twelfth functions are disabled. Thus, the agricultural machine 1 can travel on the farm road at a relatively high speed and, if the farm road is rough ground, can use the second function and/or the third function and travel thereon properly. Additionally, the agricultural machine 1 even on the farm road can perform work.

As previously described, the second road area defines a public road, and is an external area E2 used mainly for movement of the agricultural machine 1 therealong. In the function table for the second road area, the first function is enabled, and the second to the twelfth functions are disabled. Thus, the agricultural machine 1 can travel on the public road at a relatively high speed, and can be prevented from mistakenly traveling on the public road while being in the speed-equalized 4WD mode or the speed-increased 4WD mode, and from mistakenly performing work and/or the like with the working device 2 on the public road.

As previously described, the storage area is an external area E2 used to store the agricultural machine 1 therein, and is, for example, a barn which can store the agricultural machine 1 indoors, or a parking area which can store the agricultural machine 1 outdoors. In the function table for the storage area, the fourth and the fifth functions are enabled, and the sixth to the twelfth functions are disabled. Thus, the agricultural machine 1, when causing the working device 2 to move up or down, is prevented from mistakenly bringing the working device 2 into contact with the ground in the storage area, or from mistakenly performing work with the working device 2 in the storage area.

The waiting area is an external area E2 used for the agricultural machine 1 to temporarily wait for a transport vehicle, such as a truck, to transport the agricultural machine 1 loaded thereon. In the function table for the waiting area, the fourth and the fifth functions are enabled, and the first to the third functions and the sixth to the twelfth functions are disabled. Thus, if the working device 2 needs to be moved up or down when the agricultural machine 1 is being loaded on a transport vehicle, it is possible to appropriately move the working device 2 upward or downward. Also, the working device 2 is prevented from mistakenly abutting against a trailer or truck bed of the transport vehicle, or from mistakenly performing work and/or the like on the trailer or truck bed.

The rest area is an external area E2 used for the user(s) to temporarily stop the agricultural machine 1 and rest himself, herself or themselves therein. In the function table for the rest area, the first to the twelfth functions are disabled. Thus, even if the user when resting therein mistakenly uses the first operation device 42 or the second operation device 93 and/or the like, the agricultural machine 1 is prevented from unexpectedly performing work with the working device 2 or from unexpectedly traveling at the relatively high speed.

The vehicle-wash area is an external area E2 used to wash the agricultural machine 1 therein. In the function table for the vehicle-wash area, the fourth, the fifth and the seventh functions are enabled, and the first to the third functions, the sixth, the eight and the twelfth functions are disabled. Thus, if the agricultural machine 1 when being washed in the vehicle-wash area is stationary therein, it is possible for the working device 2 to be driven by power transmitted via the PTO shaft 22 so as to achieve appropriate washing of the working device 2.

As previously described, the first supply area is an external area E2 used to supply an energy source to the agricultural machine 1 therein, and provided therein with a tank to store fuel and/or an electric station to supply electricity. In the function table for the storage area, the first to the twelfth functions are disabled. Thus, even if the user operating to supply the energy source to the agricultural machine 1 mistakenly uses the first operation device 42 or the second operation device 93 and/or the like, the agricultural machine 1 is prevented from unexpectedly performing work with the working device 2 or unexpectedly traveling at the relatively high speed.

The second supply area is an external area E2 used to supply the working device 2 therein with crops to be planted in an internal area E1, or with agricultural chemicals or fertilizer to be spread over the internal area E1. In the function table for the second supply area, the fourth to the sixth functions are enabled, and the first to the third functions and the seventh to the twelfth functions are disabled. Thus, even if the user when supplying the working device 2 with crops and/or the like mistakenly uses the first operation device 42 or the second operation device 93 and/or the like, the agricultural machine 1 is prevented from unexpectedly performing work with the working device 2 or traveling at a relatively high speed.

The crop-discharge area is an external area E2 used to discharge crops having been harvested in an internal area E1 by the working device 2. In the function table for the crop-discharge area, the fourth and the fifth functions are enabled, and the first to the third functions and the sixth to the twelfth functions are disabled. Thus, even if the user mistakenly uses the first operation device 42 or the second operation device 93 and/or the like while crops and/or the like are being discharged from the working device 2 therein, the agricultural machine 1 is prevented from unexpectedly performing work with the working device 2 or from unexpectedly traveling at the relatively high speed.

The maintenance area is an external area E2 used to detach the working device 2 from the agricultural machine 1 therein, and is a barn or the like to store working devices 2. In the function table for the maintenance area, the fourth and the fifth functions are enabled, and the first to the third functions and the sixth to the twelfth functions are disabled. Thus, it is possible to detach the working device 2 from the agricultural machine 1 because the working device 2 can be moved up and down while the agricultural machine 1 is prevented from unexpectedly traveling at the relatively high speed.

The mud removing area is an external area E2 used to remove dirt such as mud from the working device 2 attached to the agricultural machine 1 therein. In the mud removing area, the agricultural machine 1 repeatedly travels forward and rearward while driving the working device 2 by power transmitted via the PTO shaft 22 such as to remove dirt such as mud from the working device 2. In the function table for the mud removing area, the fourth and the sixth functions are enabled, and the first to the third functions, the fifth function, and the seventh to twelfth functions are disabled. Thus, the agricultural machine 1 is prevented from unexpectedly traveling at the relatively high speed, and can appropriately wash the dirt from the working device 2 by driving the working device 2 during the forward or rearward travel of the agricultural machine 1.

The noise warning area is an external area E2 in the vicinity of one or more of places such as residential areas and/or public facilities which are out of the management by the user or the manager for the agricultural machine 1 and where noise generation is forbidden or not preferable. In the function table for the noise warning area, the eleventh function is enabled, and the first to the tenth functions and the twelfth function are disabled. Thus, in a case where the agricultural machine 1 is in the noise warning area, it is possible to limit the rotational frequency of the prime mover 4 so as to prevent noise from being louder than an endurable limit level.

The slope area is an external area E2 which is, for example, a passageway between a farm road and an agricultural field G, a relatively sloped public road or the like. In the function table for the slope area, the twelfth function is enabled, and the first to the eleventh functions are disabled. Thus, even in a case where the agricultural machine 1 with a trailer attached thereto travels on a sloped public road or the like, it is possible for the trailer to travel stably.

A non-purpose agricultural field area is an external area E2 defining an agricultural field G which is out of management by the user or the manager and is owned by a third party. In the function table for the non-purpose agricultural field area, the first to the twelfth functions are disabled.

The function definer 40c may be configured or programmed to, even in a case where a vehicle-body position VP is in an internal area E1, define whether any one of the functions is enabled or disabled. In the function table for the internal area E1, the second to the ninth functions are enabled, and the first function and the tenth to the twelfth function are disabled. Thus, the agricultural machine 1 can appropriately travel therein or perform work therein. In other words, the internal area E1 is one of area categories. Hereafter, an area category may be described as a category corresponding to an area and not as a category corresponding to an external area E2. That is, the area categories include an internal area E1 as an area category in addition to categories for external areas E2.

As described above, the agricultural machine 1 can operate appropriate functions in response to what is the area E1 or E2 where the agricultural machine 1 is located.

Note that the above-mentioned set of area categories for external areas E2 is only an example, only one or more of the above-mentioned area categories may be used, and one or more other area categories may be added to the above-mentioned air categories or may replace one or more of the above-mentioned air categories. For example, the air categories for external areas E2 may include a warehouse area that can be used as the storage area, the second supply area and the crop-discharge area. The warehouse area is an area used to store the agricultural machine 1, crops, agricultural chemicals or fertilizer therein. In the function table for the warehouse area, the fourth function and the fifth function are enabled, and the first to the third functions and the sixth to the twelfth functions are disabled.

In a case where a manager uses the management terminal 81 to create a work plan via the external server 60 or the like, the assistance device 80 may include a redefiner 40d configured or programmed to redefine an internal area E1 as a non-purpose agricultural field based on the work plan. As illustrated in FIG. 1, the redefiner 40d is included in the first controller 40 that includes electric/electronic circuit(s) and a CPU(s) and/or the like with program(s) and/or the like installed therein.

The redefiner 40d is configured or programmed to acquire the work plan from the third storage 62 of the external server 60 via the first communicator 43. The work plan includes pieces of information such as information related to date and time of work, identification information about the user and the agricultural machine 1, information about contents of work to be performed by the agricultural machine 1, identification information about the agricultural field G (internal area E1) where work is to be performed, and/or the like. The redefiner 40d is configured or programmed to temporarily redefine, as one or more external areas E2, one or more internal areas E1 other than one or more internal areas E1 where the agricultural machine 1 is not to perform work, based on the work plan acquired from the third storage 62 of the external server 60. To temporarily redefine, as one or more external areas E2, one or more internal areas E1 other than one or more internal areas E1 where the agricultural machine 1 is not to perform work, the redefine 40d is configured or programmed to update one or more pieces of management information respectively assigned to one or more internal areas E1 included in an entire map stored in the second storage 53 by overwriting or adding an arbitrary character string indicating that this area is (these areas are) temporarily treated as an external area (external areas) E2.

In the above-mentioned example embodiment, the first controller 40 is configured or programmed to control each of the functions based on whether each of the functions is defined by the function definer 40c to be enabled or disenabled. In this regard, the assistance device 80 may display a notification to the user according to an area category corresponding to the area E1 or E2 where the agricultural machine 1 is located.

The assistance device 80 includes a notifier configured or programmed to provide a notification to the user. The notifier provides sound, light and/or the like as the notification to the user. For example, the management terminal 81 and/or the display 95 may be used as the notifier. More specifically, the management terminal 81 or the display 95 displays a notification screen 170 to indicate a notification according to the area category corresponding to the area E1 or E2 where the agricultural machine 1 is located. The following provides an explanation regarding the notifier on an assumption that the display 95 is used as the notifier and omits description of a case where the management terminal 81 is used as the notifier. The notifier need only be able to provide sound, light and/or the like as a notification to the user, is not limited to the management terminal 81 or the display 95, and may be a speaker or the like to output a notification sound.

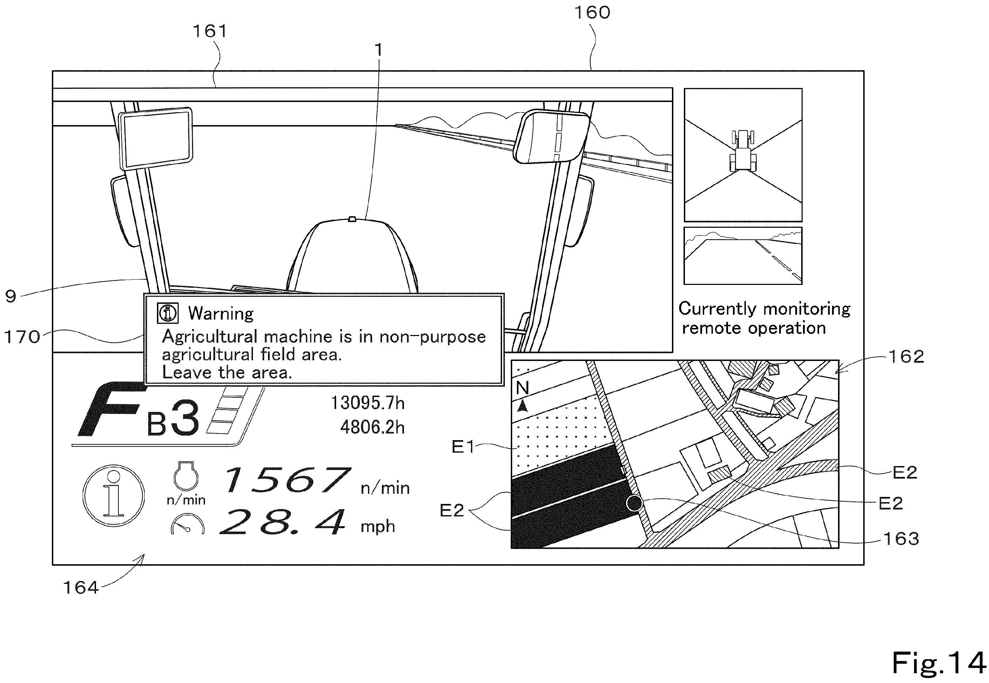

FIG. 14 illustrates a case where the notifier is the display 95, and where the notification screen 170 is displayed on the fourth display screen 96. In a case where the agricultural machine 1 is in the remote operation mode and the display 95 displays the remote operation screen 160, when the seventh controller 97 determines that the agricultural machine 1 is located in a non-purpose agricultural field area based on the vehicle-body position VP received by the seventh communicator 99 and based on the entire map, the seventh controller 97 displays the notification screen 170 as a pop-up on the remote operation screen 160. The notification screen 170 displays a message such as "Agricultural machine 1 is located in a non-purpose area. Move to the outside of the area E1 or E2", and warns the user that the agricultural machine 1 is in a non-purpose agricultural field area.

The above-mentioned example embodiment describes a case where the notifier notifies the user of a notification related to the area category corresponding to the area E1 or E2 where the agricultural machine 1 is located. Alternatively or additionally, the notifier may be configured or programmed to provide a warning notification to the user when the agricultural machine 1 is located in a vicinity of a warning point. More specifically, the map creator 55 is configured or programmed to determine a warning point at a position on the external map and, the notifier is configured or programmed to, when the agricultural machine 1 is located in the vicinity of the warning point, provide a notification to the user based on the vehicle-body position VP detected by the first position detector 30 and based on the warning point. First, a case where the user uses the display terminal 50 to manually determine a warning point will be described.

The map creator 55 is configured or programmed to receive an input of warning information indicating a point where warning is to be performed and content of the warning, and determine, as a warning point, a position on the external map. The map creator 55 is configured or programmed to, based on the information inputted on the first display screen 51, receive the input of warning information indicating a point where warning is to be performed and content of the warning. In the following description, an arbitrary point inputted and received by the map creator 55 as the warning point is referred to as "second designated position".

The map creator 55 is configured or programmed to define a warning point based on the inputted warning information. The map creator 55 is configured or programmed to acquire content of the warning and the second designated position from the inputted warning information. The map creator 55 is configured or programmed to associate the warning information with positional information about the second designated position, cause the second storage to store the associated pieces of information, and define a warning point on the external map (entire map in the present example embodiment) stored in the second storage 53. The first communicator 43 transmits the external map including the warning point defined by the map creator 55 to the third communicator 63, and the third controller 61 is configured or programmed to cause the third storage 62 to store the external map received by the third communicator 63.

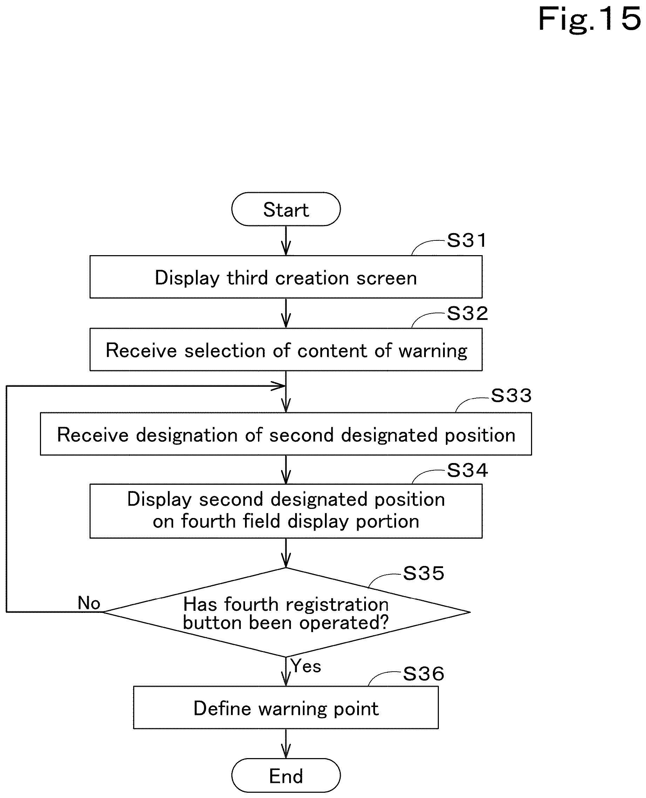

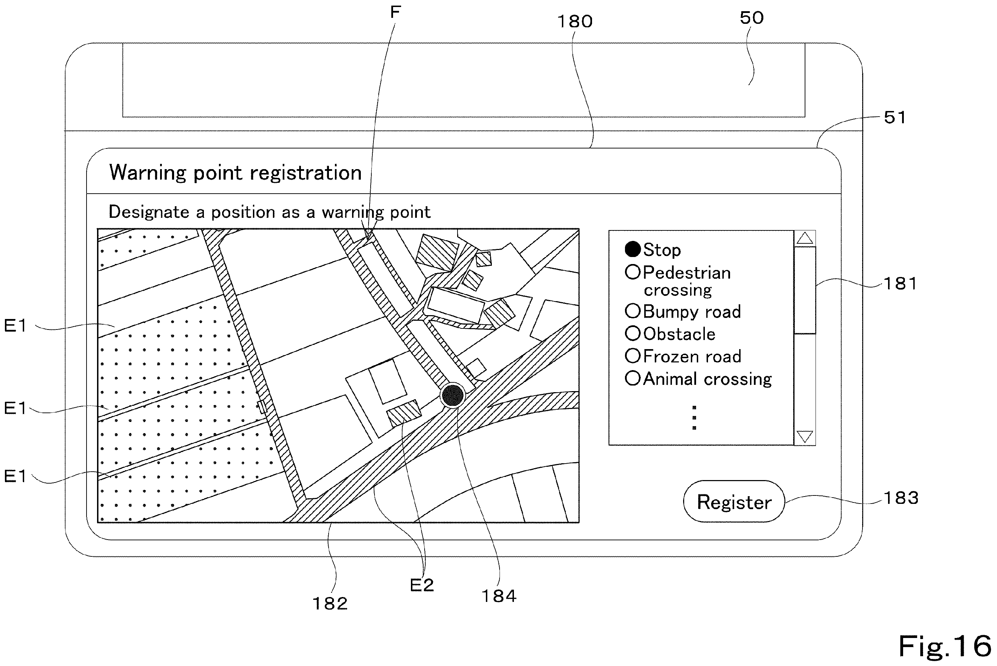

A flow of processes to determine a warning point performed by the map creator 55, and an image displayed on the first display screen 51 will now be described using FIGS. 15 and 16. FIG. 15 illustrates a flowchart of processes to determine a warning point performed by the map creator 55. FIG. 16 illustrates an example of a third selection screen 180. When the user uses the display terminal 50 to input something, the map creator 55 causes the first display screen 51 to display the third creation screen 180 such as illustrated in FIG. 16 (S31).

The third creation screen 180 displays a fourth selection portion 181 on which an operation to select what is to be warned of (content of the warning) is performed, a third field display portion 182 to indicate information based on the external map (entire map in the present example embodiment), and a fourth registration button 183. In the example of the third creation screen 180 illustrated in FIG. 16, the fourth selection portion 181 indicates a list of optional contents of the warning. The map creator 55 receives one optional content of the warning selected by the user from the indicated list of the optional contents of the warning. In the present example embodiment, the fourth selection portion 181 indicates a list of warnings including a warning to stop, a warning of a pedestrian crossing, a warning of a bumpy road, and a warning of some incident (obstacle, frozen road, animal crossing) as a list of optional contents of the warning.

The third field display portion 182 displays an agricultural field F. Pieces of information based on an external map (entire map in the present example embodiment) are displayed on the agricultural field F and associated with pieces of positional information such as latitude, longitude or coordinates (X axis and Y axis). That is, the agricultural field F displays pieces of positional information indicating an internal map and/or an external map included in an entire map (at least one of an internal map and an external map). On operating to designate a point on the third field display portion 182 by tapping, placing a cursor, and/or the like, the map creator 55 receives designation of a second designated position as a warning point. The map creator 55 receives data of the second designated position indicated by latitude and longitude, coordinates (X axis and Y axis) or the like. In the present example embodiment, the map creator 55 is configured or programmed to, when the operation to designate an arbitrary point on the third field display portion 182, such as tapping of the point, placing of a cursor at the point, or the like, is performed, receive designation of the second designated position. FIG. 16 illustrates the third display portion 182 indicating the agricultural field F in which an arbitrary point tapped to designate the second designated position is indicated as an icon 184.

The map creator 55 is configured or programmed to, when the first display screen 51 displays the third creation screen (S31) and the user performs a selection operation on the fourth selection portion 181, receive the optional content of the warning selected at the fourth selection portion 181 (S32). The user taps or selects via a cursor an arbitrary point in the third field display portion 182 so as to designate a second designated position, and the map creator 55 receives the second designated position (S33).

Then, the map creator 55 acquires positional information on the received second designated position, causes the second storage 53 to record the second designated position at an appropriate time, and causes the fourth field display portion to display the second designated position therein at an appropriate time (S34).

The map creator 55 is configured or programmed to, when the user ends designation of the second designated position and operates the fourth recording button 183 (S35: YES), acquire the second designated position and the selected content of the warning from the inputted warning information, associate the warning information with the positional information on the second designated position and cause the second storage 53 to store the associated information, and to define the warning point on the external map (entire map in the present example embodiment) stored in the second storage 53 (S36).

According to the above, the user can easily define a warning point by operating the map creator 55.

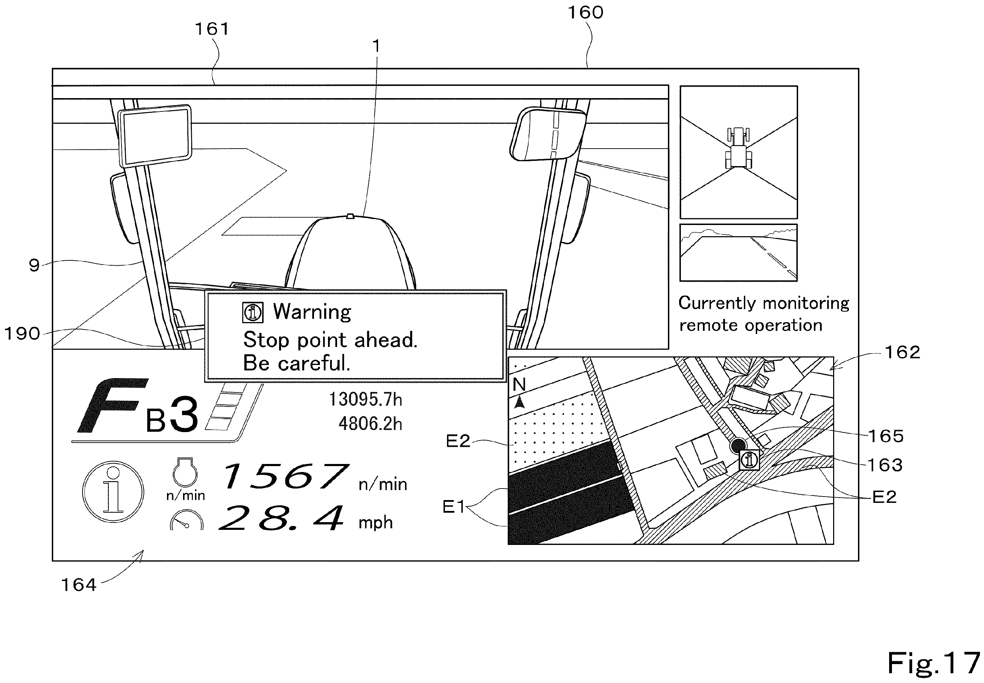

FIG. 17 illustrates a case where the notifier is the display 95 that displays a notification screen 190 on the fourth display screen 96. In a case where the agricultural machine 1 is in the remote operation mode and the display screen 95 displays the remote operation screen 160, a warning icon 165 is displayed on the second map display portion 162 to indicate a position defined by the map creator 55 as a warning point.

When the seventh controller 97 determines that the agricultural machine 1 is located in a vicinity of (for example, about 1 or 2 meters from) the warning point based on the vehicle point VP received by the seventh communicator 99 and based on the entire map, the seventh controller 97 displays, on the remote operation screen 160, a pop-up as the warning screen 190. In a case where the warning for the warning point is the warning to stop, the warning screen 190 displays a message such as "Stop point ahead. Be careful.", and notifies the user that the agricultural machine 1 needs to stop.

According to the above, the user can precisely grasp surroundings of the location of the agricultural machine 1.

The previous example embodiment describes the case where the user uses the display terminal 50 to manually define a warning point. However, the map creator 55 may be configured or programmed to automatically define a warning point based on one or more vehicle-body positions VP detected by the first position detector 30 and based on operation information and/or environmental information detected by the detector 31 at each of the one or more vehicle-body positions VP. The following describes a fourth variation in which the map creator 55 is configured or programmed to define a warning point based on one or more vehicle-body positions VP and based on operation information and/or environmental information.

In the fourth variation, the map creator 55 is configured or programmed to, when the agricultural machine 1 travels in the outside of the agricultural field G, estimate warning information indicating a location where a warning is to be performed and a content of the warning based on the one or more vehicle-body position VP detected by the first position detector 30 and based on the operation information and/or the environmental information detected by the detector 31 at each of the one or more vehicle-body positions VP.

More specifically, the map creator 55 is configured or programmed to acquire the data created by the sensing devices 31i, perform, on the data, an image analysis process such as SLAM, a pattern matching process and/or the like, and estimate what is an area category for an external area E2. For example, the map creator 55 is configured or programmed to consult the data created by the sensing devices 31i to estimate what is the content of the warning for the place where the agricultural machine 1 is located, such as warning of a stop, a pedestrian crossing, or a bumpy road, based on road signs and/or instruction signs such as lanes and/or stop lanes. The map creator 55 is configured or programmed to estimate what is the operation status of the agricultural machine 1 and estimate what is the content of the warning, such as warning of incident, for the location of the agricultural machine 1 based on a detection signal from the detector 31 such as the speed sensor 31g, the posture detection sensor 31h and/or the like. Thus, the map creator 55 is configured or programmed to estimate warning information based on the vehicle-body positions VP detected by the first position detector 30 and based on the estimated content of the warning.

The map creator 55 is configured or programmed to define a warning point based on the estimated warning information. The map creator 55 is configured or programmed to acquire one or more vehicle-body positions VP detected by the first position detector 30 and the content of the warning from the estimated warning information for each of the one or more vehicle-body positions VP. The map creator 55 is configured or programmed to associate the corresponding content of the warning with the positional information on each of the vehicle-body positions VP, cause the second storage 53 to store the associated pieces of information, and define one or more warning points on the external map (entire map in the present example embodiment) stored in the second storage 53.

The map creator 55 may be configured or programmed to, when being to define, as a warning point, a point on the external map based on the estimated warning information, cause the first display screen 51 to display a confirmation screen (not illustrated) to provide the estimated warning information to the user, and receive the user's confirmation of the estimated warning information. Unless the user confirms the estimated warning information on the confirmation screen, the map creator 55 does not define, as the waring point, the point on the external map based on the warning information.

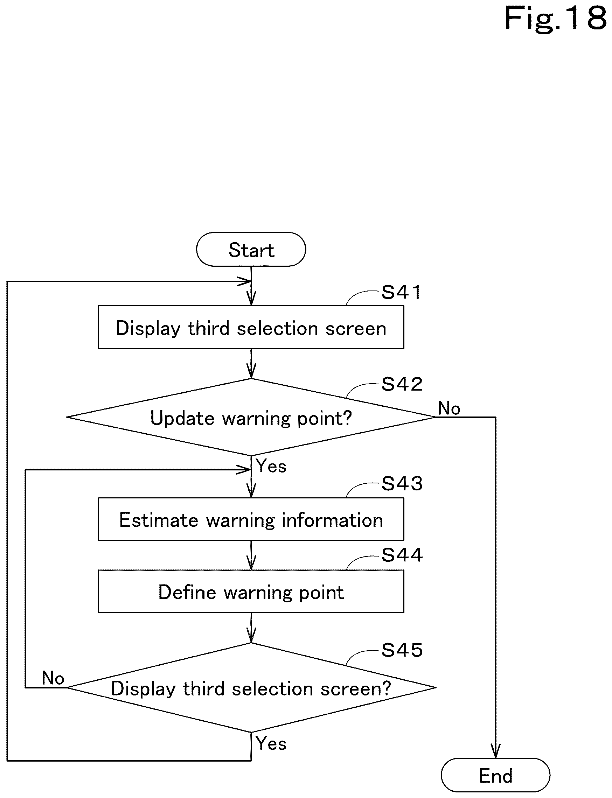

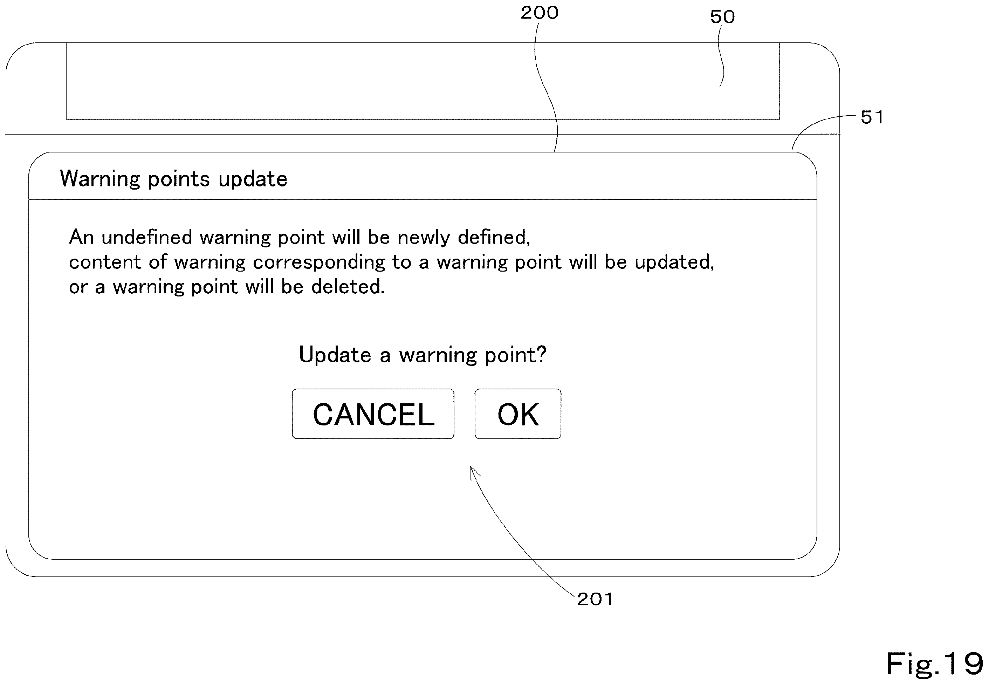

A flow of processes to define a warning point performed by the map creator 55, and an image of a screen displayed on the first display screen 51 will now be described using FIGS. 18 and 19. FIG. 18 illustrates a flowchart of processes to define a warning point performed by the map creator 55.

When the user performs an input operation on the display terminal 50, the map creator 55 causes the first display screen 51 to display a third selection screen 200 such as illustrated in FIG. 19 (S41). FIG. 19 illustrates an example of the third selection screen 200. In the example of the third selection screen 200 illustrated in FIG. 19, the third selection screen 200 displays a fifth selection portion 201. The fifth selection portion 201 displays one or more options to ask whether to update the warning point.

When the map creator 55 receives, via the fifth selection portion 201, a selection to update a warning point (S42: YES), the map creator 55 estimates warning information based on vehicle-body positions VP and based on operation information and/or environmental information (S43).

Then, the map creator 55 defines a warning point on the external map (S44) based on the estimated warning information. The map creator 55 confirms whether an input operation to cause the first display screen 51 to display the third selection screen 200 has been performed (S45). In a case where the map creator 55 confirms that the input operation to cause the first display screen 51 to display the third selection screen 200 has not been performed (S45: NO), the map creator 55 returns a process to S43. In a case where the map creator 55 confirms that the input operation to cause the first display screen 51 to display the third selection screen 200 has been performed (S45: YES), the map creator 55 returns a process to S41.

When the map creator 55 receives, via the fifth selection portion 201, a selection not to update the external map (S42: NO), the map creator 55 ends the series of processes.

According to the above, the user can easily define a warning point by causing the agricultural machine 1 to travel outside of the agricultural field G.

Example embodiments of the present invention provide assistance systems S for agricultural machines 1 as described in the following items.

(Item 1) An assistance system S for an agricultural machine 1 including a first position detector 30 provided in or on the agricultural machine 1 and configured to detect a vehicle-body position VP which is a position of the agricultural machine 1, a map creator 55 configured or programmed to create an external map which indicates an external area E2 outside of an agricultural field G and includes a periphery of the agricultural field G, and an assistance device 80 configured or programmed to assist the agricultural machine 1 based on the vehicle-body position VP detected by the first position detector 30 and based on the external map created by the map creator 55.

According to the assistance system S of Item 1, the agricultural machine 1 can perform an action appropriate to a present position thereof even when located outside of the agricultural field G.

(Item 2) The assistance system S according to Item 1, wherein the map creator 55 is configured or programmed to create an entire map indicating a state inside the agricultural field G and a state outside the agricultural field G by creating an internal map indicating an internal area E1 an internal area of the agricultural field G in addition to the external map.

According to the assistance system S of Item 2, the agricultural machine 1 can perform an action appropriate to a present position thereof regardless of whether the agricultural machine 1 moves from the external area E2 to the inner area E1 or from the internal map to the external map.

(Item 3) The assistance system S according to Item 2, wherein the map creator 55 is configured or programmed to, when the agricultural machine 1 travels in the external area E2, create the external map based on one or more vehicle-body positions VP detected by the first position detector 30.

According to the assistance system S of Item 3, the user can easily create an external map by causing the agricultural machine 1 to travel outside of the agricultural field G.

(Item 4) The assistance system S of Item 3, wherein the map creator 55 is configured or programmed to, when the agricultural machine 1 travels in the internal area E1, create the internal map based on one or more vehicle-body positions VP detected by the first position detector 30.

According to the assistance system S of Item 4, a user can easily create an internal map by causing the agricultural machine 1 to travel outside of the agricultural field G.

(Item 5) The assistance system S of Item 2, further including a detector 31 provided in or on the agricultural machine 1 to detect operation information on an operation of the agricultural machine 1 and/or environmental information on an environment around the agricultural machine 1, wherein the map creator 55 is configured or programmed to, when the agricultural machine 1 travels in the external area E2 or in a vicinity of the external area E2, estimate a position of the external area E2 based on one or more vehicle-body positions VP detected by the first position detector 30 and based on the operation information and/or the environmental information detected by the detector 31 at the respective one or more vehicle-body positions VP, and create the external map based on the estimated position of the external area E2.

According to the assistance system S of Item 5, a user can automatically create an external map by causing the agricultural machine 1 to travel outside of the agricultural field G.

(Item 6) The assistance system S of Item 5, wherein the map creator 55 is configured or programmed to, when the agricultural machine 1 travels in the internal area E1 or in a vicinity of the internal area E1, estimate a position of the internal area E1 based on one or more vehicle-body positions VP detected by the first position detector 30 and based on the operation information and/or the environmental information detected by the detector 31 at the respective one or more vehicle-body positions VP, and create the internal map based on the estimated position of the internal area E1.

According to the assistance system S of Item 6, a user can automatically create an internal map by causing the agricultural machine 1 to travel outside of the agricultural field G.

(Item 7) The assistance system S of Item 4 or 6, wherein the map creator 55 is configured or programmed to, when the agricultural machine 1 moves from a first area corresponding to the external map or internal map to a second area which is adjacent to the first area and for which the map creator 55 has created no map, create a map corresponding to the second area by expanding, from the external map or the internal map corresponding to the first area, the map corresponding to the second area so as to create the entire map.

According to the assistance system S of Item 7, it is possible to increase a range of areas (areas E1 and E2) indicated by the entire map along with the movement of the agricultural machine 1 from the first area to the second area. That is, it is possible to create the entire map including both the external map and the internal map by moving the agricultural machine 1 in the areas E1 and E2.

(Item 8) The assistance system S according to any one of Items 4 to 7, wherein the map creator 55 is configured or programmed to, when the agricultural machine 1 moves from a first area corresponding to the external map or the internal map to a second area which is adjacent to the first area and for which the map creator 55 has created a corresponding map, combine the external map or the internal map corresponding to the first area and the corresponding map corresponding to the second area so as to create the entire map.

According to the assistance system S Item 8, it is possible to precisely define a positional relationship between a map corresponding to the first area, and a map corresponding to the second area.

(Item 9) The assistance system S according to Item 2, further including a second position detector 75 provided in or on a recorder 70 different from the agricultural machine 1 and configured to detect a device position DP which is a position of the recorder 70, wherein the map creator 55 is configured or programmed to, when the recorder 70 is carried in the external area E2, create the external map based on one or more device positions DP detected by the second position detector 75.

According to the assistance system S of Item 9, the user can easily create the external map by causing the recorder 70 to be carried outside of the agricultural field G.

(Item 10) The assistance system S according to Item 9, wherein the map creator 55 is configured or programmed to, when the recorder 70 is carried on the agricultural field G, create the internal map based on one or more device positions DP detected by the second position detector 75.

According to the assistance system S of Item 10, the user can easily create the internal map by causing the recorder 70 to be carried outside of the agricultural field G.

(Item 11) The assistance system S according to Item 10, wherein the map creator 55 is configured or programmed to, when the recorder 70 is carried from a first area corresponding to the external map or the internal map to a second area which is adjacent to the first area and for which the map creator 55 has created no map, create a map corresponding to the second area by expanding, from the external map or the internal map corresponding to the first area, the map corresponding to the second area so as to create the entire map.

According to the assistance system S of Item 11, it is possible to increase a range of areas (areas E1 and E2) indicated by the entire map along with the movement of the portable terminal 70 carried from the first area to the second area. That is, it is possible to create the entire map including both the external map and the internal map by carrying the portable terminal 70 in the areas E1 and E2.

(Item 12) The assistance system S according to Item 10 or 11, wherein the map creator 55 is configured or programmed to, when the recorder 70 is carried from a first area corresponding to the external map or the internal map to a second area which is adjacent to the first area and for which the map creator 55 has created a corresponding map, combine the external map or the internal map corresponding to the first area and the corresponding map corresponding to the second area so as to create the entire map.

According to the assistance system S of Item 12, it is possible to define a relationship between a map corresponding to the first area and a map corresponding to the second area more precisely.

(Item 13) The assistance system S according to Item 1, wherein the map creator 55 is configured or programmed to receive a designation of an arbitrary position and define the external area E2 based on the designated arbitrary position so as to create the external map.

According to the assistance system S of Item 13, the user can easily create the external map by operating the map creator 55.

(Item 14) The assistance system S according to any one of Items 1 to 13, wherein the map creator 55 is configured or programmed to receive a designation of an area category indicating a category corresponding to the external area E2 and associate the received area category with the external area E2.

According to the assistance system S of Item 14, the user can easily assign an area category to the external area E2 via the map creator 55.

(Item 15) The assistance system S according to any one of items 1 to 13, further including a detector 31 provided in or on the agricultural machine 1 and configured to detect operation information on an operation of the agricultural machine 1 and/or environmental information on an environment around the agricultural machine 1, wherein the map creator 55 is configured or programmed to, when the agricultural machine 1 travels in the external area E2 or in a vicinity of the external area E2, estimate an area category indicating a category corresponding to the external area E2 based on one or more vehicle-body positions VP detected by the first position detector 30 and based on the operation information and/or the environmental information detected by the detector 31 at the respective one or more vehicle-body positions VP, and associate the estimated area category with the external area E2.

According to the assistance system S of Item 15, the user can easily assign an area category to the external area E2 by causing the agricultural machine 1 to travel outside of the agricultural field G.

(Item 16) The assistance system S according to Item 14 or 15, wherein the agricultural machine 1 is configured to perform a plurality of functions, and the assistance device 80 includes a function definer 40c configured or programmed to define each of the plurality of functions as enabled or disabled based on the vehicle-body position VP detected by the first position detector 30 and based on the area category corresponding to the external area E2 to which the vehicle-body position VP belongs.

According to the assistance system S of Item 16, the agricultural machine 1 can perform functions corresponding to the area E1 or E2 where the agricultural machine 1 is located.

(Item 17) The assistance system S according to any one of Items 1 to 16, wherein the map creator 55 is configured or programmed to define a warning point at a specified position on the external map, and the assistance device 80 includes a notifier 81 or 95 configured or programmed to, when the agricultural machine 1 is in a vicinity of the warning point, provide a notification to a user based on the vehicle-body position VP detected by the first position detector 30 and based on the warning point defined by the map creator 55.

According to the assistance system S of Item 17, the user can precisely grasp a state of surroundings of a location of the agricultural machine 1.

(Item 18) The assistance system S according to Item 17, wherein the map creator 55 is configured or programmed to receive the warning information indicating a point at which a warning is to be provided and content of the warning, and define the warning point based on the inputted warning information.

According to the assistance system S of Item 18, the user can easily define a warning point via the map creator 55.

(Item 19) The assistance system S according to Item 17, further including a detector 31 provided in or on the agricultural machine 1 to detect operation information on an operation of the agricultural machine 1 and/or environmental information on an environment around the agricultural machine 1, wherein the map creator 55 is configured or programmed to, when the agricultural machine 1 travels outside of the agricultural field G, estimate warning information indicating a warning point at which a warning is to be provided and content of the warning based on one or more vehicle-body positions VP detected by the first position detector 30 and based on the operation information and/or the environmental information detected by the detector 31 at the respective one or more vehicle-body positions VP, and define the warning point based on the estimated warning information.

According to the assistance system S of Item 19, the user can easily define a warning point by causing the agricultural machine 1 to travel outside of the agricultural field G.

(Item 20) The assistance system S according to any one of Items 1 to 19, wherein the assistance device 80 includes an automatic operation controller 40a configured or programmed to perform automatic operation of the agricultural machine 1 based on the vehicle-body position VP detected by the first position detector 30 and based on the external map created by the map creator 55.

According to the assistance system S of Item 20, the agricultural machine 1 can appropriately perform automatic operation in the external area E2.

(Item 21) The assistance system S according to any one of Items 1 to 19, further including a remote operator 90 to receive an operation, wherein the assistance device 80 includes a display 95 to display the external map and the position of the agricultural machine 1 on the external map based on the vehicle-body position VP detected by the first position detector 30 and based on the external map created by the map creator 55, and a remote controller 40b communicably connected to the remote operator 90 and configured or programmed to control the agricultural machine 1 as the remote operator 90 is operated.

According to the assistance system S of Item 21, the user can remotely operate the agricultural machine 1 appropriately in the external area E2 based on the external map displayed on the display 95 and based on the position of the agricultural machine 1.

(Item 22) The assistance system S according to any one of Items 1 to 21, wherein the map creator 55 is provided in a display terminal 50 of the agricultural machine 1.

According to the assistance system S of Item 22, the user can easily create an external map while being in or on the agricultural machine 1.

While preferred embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

- 1: Agricultural machine
- 30: First position detector
- 31: Detector
- 40a: Automatic operation controller
- 40b: Remote controller
- 40c: Function definer
- 50: Display terminal
- 55: Map creator
- 70: Recorder (portable terminal)
- 75: Second position detector
- 80: Assistance device
- 81: Notifier (management terminal)
- 90: Remote operator
- 95: Notifier (display)
- DP: Device position
- E1: Internal area
- E2: External area
- G: Agricultural field
- S: Assistance system
- VP: Vehicle-body position

## Claims

1. An assistance system for an agricultural machine, the assistance system comprising:
a first position detector provided in or on an agricultural machine and configured to detect a vehicle-body position which is a position of the agricultural machine;
a map creator configured or programmed to create an external map which indicates an external area outside of an agricultural field and includes a periphery of the agricultural field; and
an assistance device configured or programmed to assist the agricultural machine based on the vehicle-body position detected by the first position detector and based on the external map created by the map creator.

2. The assistance system according to claim 1, wherein
the map creator is configured or programmed to create an entire map indicating a state inside the agricultural field and a state outside the agricultural field by creating an internal map indicating an internal area of the agricultural field in addition to the external map.

3. The assistance system according to claim 2, wherein
the map creator is configured or programmed to, when the agricultural machine travels in the external area, create the external map based on one or more vehicle-body positions detected by the first position detector.

4. The assistance system according to claim 3, wherein
the map creator is configured or programmed to, when the agricultural machine travels in the internal area, create the internal map based on one or more vehicle-body positions detected by the first position detector.

5. The assistance system according to claim 2, further comprising:
a detector provided in or on the agricultural machine to detect operation information on an operation of the agricultural machine and/or environmental information on an environment around the agricultural machine; wherein
the map creator is configured or programmed to, when the agricultural machine travels in the external area or in a vicinity of the external area, estimate a position of the external area based on one or more vehicle-body positions detected by the first position detector and based on the operation information and/or the environmental information detected by the detector at the respective one or more vehicle-body positions, and create the external map based on the estimated position of the external area.

6. The assistance system according to claim 5, wherein
the map creator is configured or programmed to, when the agricultural machine travels in the internal area or in a vicinity of the internal area, estimate a position of the internal area based on one or more vehicle-body positions detected by the first position detector and based on the operation information and/or the environmental information detected by the detector at the respective one or more vehicle-body positions, and create the internal map based on the estimated position of the internal area.

7. The assistance system according to claim 4 or 6, wherein
the map creator is configured or programmed to, when the agricultural machine moves from a first area corresponding to the external map or the internal map to a second area which is adjacent to the first area and for which the map creator has created no map, create a map corresponding to the second area by expanding, from the external map or the internal map corresponding to the first area, the map corresponding to the second area so as to create the entire map.

8. The assistance system according to any one of claims 4 to 6, wherein
the map creator is configured or programmed to, when the agricultural machine moves from a first area corresponding to the external map or the internal map to a second area which is adjacent to the first area and for which the map creator has created a corresponding map, combine the external map or the internal map corresponding to the first area and the corresponding map corresponding to the second area so as to create the entire map.

9. The assistance system according to claim 2, further comprising:
a second position detector provided in or on a recorder different from the agricultural machine and configured to detect a device position which is a position of the recorder; wherein
the map creator is configured or programmed to, when the recorder is carried in the external area, create the external map based on one or more device positions detected by the second position detector.

10. The assistance system according to claim 9, wherein
the map creator is configured or programmed to, when the recorder is carried on the agricultural field, create the internal map based on one or more device positions detected by the second position detector.

11. The assistance system according to claim 10, wherein,
the map creator is configured or programmed to, when the recorder is carried from a first area corresponding to the external map or the internal map to a second area which is adjacent to the first area and for which the map creator has created no map, create a map corresponding to the second area by expanding, from the external map or the internal map corresponding to the first area, the map corresponding to the second area so as to create the entire map.

12. The assistance system according to claim 10 or 11, wherein
the map creator is configured or programmed to, when the recorder is carried from a first area corresponding to the external map or the internal map to a second area which is adjacent to the first area and for which the map creator has created a corresponding map, combine the external map or the internal map corresponding to the first area and the corresponding map corresponding to the second area so as to create the entire map.

13. The assistance system according to claim 1, wherein
the map creator is configured or programmed to receive a designation of an arbitrary position and define the external area based on the designated arbitrary position so as to create the external map.

14. The assistance system according to claim 1, wherein
the map creator is configured or programmed to receive a designation of an area category indicating a category corresponding to the external area and associate the received area category with the external area.

15. The assistance system according to claim 1, further comprising:
a detector provided in or on the agricultural machine and configured to detect operation information on an operation of the agricultural machine and/or environmental information on an environment around the agricultural machine; wherein
the map creator is configured or programmed to, when the agricultural machine travels in the external area or in a vicinity of the external area, estimate an area category indicating a category corresponding to the external area based on one or more vehicle-body positions detected by the first position detector and based on the operation information and/or the environmental information detected by the detector at the respective one or more vehicle-body positions, and associate the estimated area category with the external area.

16. The assistance system according to claim 14 or 15, wherein
the agricultural machine is configured to perform a plurality of functions; and
the assistance device includes a function definer configured or programmed to define each of the plurality of functions as enabled or disabled based on the vehicle-body position detected by the first position detector and based on the area category corresponding to the external area to which the vehicle-body position belongs.

17. The assistance system according to claim 1, wherein
the map creator is configured or programmed to define a warning point at a specified position on the external map; and
the assistance device includes a notifier configured or programmed to, when the agricultural machine is in a vicinity of the warning point, provide a notification to a user based on the vehicle-body position detected by the first position detector and based on the warning point defined by the map creator.

18. The assistance system according to claim 17, wherein
the map creator is configured or programmed to receive input of warning information indicating a point at which a warning is to be provided and content of the warning, and define the warning point based on the inputted warning information.

19. The assistance system according to claim 17, further comprising:
a detector provided in or on the agricultural machine to detect operation information on an operation of the agricultural machine and/or environmental information on an environment around the agricultural machine; wherein
the map creator is configured or programmed to, when the agricultural machine travels outside of the agricultural field, estimate warning information indicating a warning point at which a warning is to be provided and content of the warning based on one or more vehicle-body positions detected by the first position detector and based on the operation information and/or the environmental information detected by the detector at the respective one or more vehicle-body positions, and define the warning point based on the estimated warning information.

20. The assistance system according to claim 1, wherein
the assistance device includes an automatic operation controller configured or programmed to perform automatic operation of the agricultural machine based on the vehicle-body position detected by the first position detector and based on the external map created by the map creator.

21. The assistance system according to claim 1, further comprising:
a remote operator to receive an operation; wherein
the assistance device includes:
a display to display the external map and the position of the agricultural machine on the external map based on the vehicle-body position detected by the first position detector and based on the external map created by the map creator; and
a remote controller communicably connected to the remote operator and configured or programmed to control the agricultural machine as the remote operator is operated.

22. The assistance system according to claim 1, wherein
the map creator is provided in a display terminal of the agricultural machine.
